# EUROPÄISCHE PATENTSCHRIFT

(11) **EP 3 681 282 B1**
(45) Veröffentlichungstag und Bekanntmachung des Hinweises auf die Patenterteilung: **21.06.2023**
(21) Anmeldenummer: 18769166.2
(22) Anmeldetag: 12.09.2018
(51) Int. Cl.: A01N 25/34, A01N 59/16, A01P 1/00

(54) **ANTI-MIKROBIELLE BESCHICHTUNG**
ANTIMICROBIAL COATING
REVÊTEMENT ANTIMICROBIEN

(30) Priorität: 15.09.2017 DE 102017121439
(43) Veröffentlichungstag der Anmeldung: 22.07.2020
(73) Patentinhaber: Hecosol GmbH, 96052 Bamberg (DE)
(72) Erfinder: BRÜCKNER, Ralph, 96052 Bamberg (DE)
(74) Vertreter: DTS Patent- und Rechtsanwälte Schnekenbühl und Partner mbB
(86) Internationale Anmeldenummer: PCT/EP2018/074551
(87) Internationale Veröffentlichungsnummer: WO 2019/053037

(56) Entgegenhaltungen:
- WO-A1-2010/120730
- WO-A1-2014/174084
- WO-A1-2015/040558
- WO-A1-2015/091993
- WO-A1-2016/069027
- US-A1- 2003 096 062
- SEBASTIAN BUHL ET AL: "Comparison of the effectiveness of different antimicrobial surface technologies", CURRENT DIRECTIONS IN BIOMEDICAL ENGINEERING, Bd. 3, Nr. 2, 7. September 2017 (2017-09-07), Seiten 355-357, XP055513305, DOI: 10.1515/cdbme-2017-0073
- E. ALBERT ET AL: "Antibacterial properties of Ag-TiO 2 composite sol-gel coatings", RSC ADVANCES, Bd. 5, Nr. 73, 1. Januar 2015 (2015-01-01) , Seiten 59070-59081, XP055513732, DOI: 10.1039/C5RA05990A
- KOIVISTO ANTTI J ET AL: "Particle emission rates during electrostatic spray deposition of TiO2nanoparticle-based photoactive coating", JOURNAL OF HAZARDOUS MATERIALS, ELSEVIER, AMSTERDAM, NL, Bd. 341, 29. Juli 2017 (2017-07-29), Seiten 218-227, XP085189440, ISSN: 0304-3894, DOI: 10.1016/J.JHAZMAT.2017.07.045
- GOKCEKAYA OZKAN ET AL: "In vitro performance of Ag-incorporated hydroxyapatite and its adhesive porous coatings deposited by electrostatic spraying", MATERIALS SCIENCE AND ENGINEERING C, ELSEVIER SCIENCE S.A, CH, Bd. 77, 30. März 2017 (2017-03-30), Seiten 556-564, XP085028505, ISSN: 0928-4931, DOI: 10.1016/J.MSEC.2017.03.233
- DATABASE WPI Week 201537 Thomson Scientific, London, GB; AN 2015-26797G XP002785500, -& CN 104 403 476 A (ANHUI JINDUN PAINT CO LTD) 11. März 2015 (2015-03-11)
- DATABASE WPI Week 200902 Thomson Scientific, London, GB; AN 2009-A35343 XP002785501, -& CN 101 148 556 A (HUNAN ZHICHENG NEW MATERIALS CO LTD) 26. März 2008 (2008-03-26)
- DATABASE WPI Week 201513 Thomson Scientific, London, GB; AN 2015-11971R XP002785502, -& CN 104 231 850 A (ANHUI BODA CELLULOSE TECHNOLOGY CO LTD) 24. Dezember 2014 (2014-12-24)
- DATABASE WPI Week 201770 Thomson Scientific, London, GB; AN 2017-62739H XP002785503, -& CN 107 140 850 A (JIANGSU XIUQIANG GLASS CRAFTWORK CO LTD) 8. September 2017 (2017-09-08)
- DATABASE WPI Week 201744 Thomson Scientific, London, GB; AN 2017-30481B XP002785504, -& CN 106 609 096 A (TIANCHANG JINLING ELECTRONIC CO LTD) 3. Mai 2017 (2017-05-03)
- DATABASE WPI Week 201702 Thomson Scientific, London, GB; AN 2016-67365Y XP002785505, -& CN 106 010 133 A (WANG X) 12. Oktober 2016 (2016-10-12)
- DATABASE WPI Week 201682 Thomson Scientific, London, GB; AN 2016-53108T XP002785506, -& CN 105 860 743 A (HEILONGJIANG YIAIEN NEW MATERIAL TECHNOL) 17. August 2016 (2016-08-17)
- DATABASE WPI Week 200036 Thomson Scientific, London, GB; AN 2000-415748 XP002785507, -& JP 2000 143369 A (INAX KK) 23. Mai 2000 (2000-05-23)
- TETSU TATSUMA ET AL: "Bactericidal effect of an energy storage TiO2?WO3 photocatalyst in dark", ELECTROCHEMISTRY COMMUNICATIONS, ELSEVIER, AMSTERDAM, NL, Bd. 5, Nr. 9, 1. September 2003 (2003-09-01), Seiten 793-796, XP002656981, ISSN: 1388-2481, DOI: 10.1016/J.ELECOM.2003.07.003 [gefunden am 2003-08-23]
- CORDT ZOLLFRANK ET AL: "Antimicrobial activity of transition metal acid MoOprevents microbial growth on material surfaces", MATERIALS SCIENCE AND ENGINEERING C, ELSEVIER SCIENCE S.A, CH, Bd. 32, Nr. 1, 22. September 2011 (2011-09-22), Seiten 47-54, XP028112650, ISSN: 0928-4931, DOI: 10.1016/J.MSEC.2011.09.010 [gefunden am 2011-09-29]
- S. Varghese ET AL: "Novel antibacterial silver-silica surface coatings prepared by chemical vapour deposition for infection control", Journal of Applied Microbiology, vol. 115, no. 5, 13 November 2013 (2013-11-13), pages 1107-1116, XP055142703, ISSN: 1364-5072, DOI: 10.1111/jam.12308

## Beschreibung

Die vorliegende Erfindung betrifft eine anti-mikrobielle Beschichtung eines Substrats, wobei die Beschichtung durch Anbringen der Beschichtung auf einer Oberfläche des Substrats mittels eines elektrostatischen Sprayverfahrens erhalten wird.

Oberflächen von Gegenständen, die im direkten oder indirekten Kontakt zu Menschen aber auch Tieren stehen und dazu noch einer hohen bakteriellen Belastung ausgesetzt sind, haben auf Übertragung von Krankheiten bzw. Infektionen einen nachweisbaren Einfluss. Derartige Oberflächen können z.B. durch Kleidungsstücke, Aufenthaltsräume von Gebäuden und öffentliche Verkehrsmittel sowie deren Einrichtungsgegenstände, medizinische Implantate, Hygieneartikel, Zahlungsmittel oder medizinische Geräte usw. ausgebildet sein.

Um die von diesen Oberflächen ausgehende ungewollte Übertragung von Krankheiten bzw. Infektionen einzudämmen, werden diese mit anti-mikrobiellen Beschichtungen versehen.

Sebastian Buhl et al. beschreiben in Current Directions in Biomedical Engineering, Bd. 3, Nr. 2, 7. September 2017 auf Seiten 355-357 einen Vergleich der Effektivität unterschiedlicher anti-mikrobieller Oberflächentechnologien.

E. Albert et al. beschreiben in RSC Advances, Bd. 5, Nr. 73, 1. Januar 2015 auf Seiten 59070-59081 antibakterielle Eigenschaften von zusammengesetzten Ag-TiO₂ Sol-Gel Beschichtungen.

Koivisto Antti J. et al. beschreiben in Journal of Hazardous Materials, Bd. 341, 29. Juli 2017 auf, Seiten 218-227 Partikelemissionsraten während der Deposition einer TiO₂-Nanopartikel-basierten photoaktiven Beschichtung durch elektrostatisches Srühen.

WO 2016/069027 A1 beschreibt anti-mikrobielle Zusammensetzungen und Methoden.

WO 2010/120730 A1 beschreibt Materialien, Geräte und Verfahren zur Entfernung gefährlicher Substanzen.

US 2003/096062 A1 beschriebt ein Verfahren und Produkt zur antimikrobiellen Metallbeschichtung.

Gokcekaya Ozkan et al. beschreiben in Materials Science and Engineering, Bd. 77, 30. März 2017 auf Seiten 556-564 die in-vitro-Leistung von Ag-inkorporiertem Hydroxylapatit und seiner adhäsiven porösen Beschichtungen, die durch elektrostatisches Sprühen aufgebracht sind.

WO 2015/040558 A1 beschreibt einen anti-mikrobiellen Film mit doppelter Wirkung.

CN 104403476 A beschreibt eine selbstreinigende antibakterielle Fluorkohlenstoffbeschichtung.

CN 101148556 A beschreibt ein Material zur Herstellung antibakterieller Beschichtungen enthaltend Partikel mit einem Silberiodid-Kern und einer TiO₂-Hülle.

CN 104231850 A beschreibt ein Material zur Herstellung antibakterieller Beschichtungen enthaltend Zinkoxid und Kupfersulfat in einem Epoxidharz.

CN 107140850 A beschreibt eine antimikrobielle Beschichtung auf einer Glasoberfläche.

CN 106609096 A beschreibt eine antimikrobielle Beschichtung einer Oberfläche durch elektrostatisches Sprühen einer Zusammensetzung enthaltend TiO₂ und Zinkstearat.

CN 106010133 A beschreibt eine antimikrobielle Beschichtung einer Oberfläche eines Abflussrohres/-kanals mit einer Zusammensetzung enthaltend TiO₂, Ceroxid, Zinkmolybdat, und Silber-Zirkoniumphosphat.

CN 105860743 A beschreibt eine antimikrobielle Beschichtung der inneren Oberfläche eines Rohr mit einer Zusammensetzung enthaltend TiO₂.

JP 2000 143369 A beschreibt eine antimikrobielle Beschichtung einer keramischen Oberfläche mit einer Zusammensetzung enthaltend TiO₂ und Silbermolybdat.

Tetsu Tatsuma et al. beschreiben in Electrochemistry Communications, Bd. 5, Nr. 9, 1. September 2003, auf Seiten 793-796 die Beschichtung einer Pyrex-Glasplatte mit einem TiO₂-WO₃-Film mittels Spin coating und nachfolgendem Calcinieren.

Cordt Zollfrank et al. beschreiben in Materials Science and Engineering C, Bd. 32, Nr. 1, 22. September 2011, auf Seiten 47-54 ein Verfahren zum Herstellen eines antimikrobiell wirksamen Verbundwerkstoffs.

S. Varghese et al. beschreiben in Journal of Applied Microbiology, Bd. 115, Nr. 5, 13. November 2013 auf Seiten 1107-1116 eine antimikrobielle Beschichtung mit inselförmigen Aggregaten.

Aus der DE 20 2006 018 695 U1 ist bereits eine Verwendung eines anorganischen Stoffes bekannt, der in Kontakt mit einem wässrigen Medium die Bildung von Wasserstoff-Kationen bewirkt und zur Erzielung einer anti-mikrobiellen Wirkung dient.

Ferner offenbart die DE 10 2012 103 064 A1 ein hydrophiles Verbundmaterial mit wenigstens einem Trägermaterial und wenigstens einem anti-mikrobiell wirksamen Agens in Form eines Metalls oder einer Metallverbindung.

Zudem ist in der DE 10 2013 114 575A ein Verfahren zum Herstellen eines antimikrobiell wirksamen Verbundwerkstoffs gezeigt, bei welchem wenigstens eine Molybdän- und/oder Wolfram-haltige anorganische Verbindung mit wenigstens einem weiteren Werkstoff verbunden wird.

Die DE 10 2013 114 573 A1 zeigt außerdem ein Verfahren zum Herstellen eines antimikrobiell wirksamen Möbel- und/oder Innenausbauteils, bei welchem wenigstens eine Molybdän-haltige anorganische Verbindung zumindest im Bereich einer Oberfläche des Möbel- und/oder Innenausbauteils angeordnet wird.

Im Übrigen ist in der DE 10 2013 104 284 A1 ein Verfahren zum Herstellen eines dotierten oder undotierten Mischoxids für einen Verbundwerkstoff offenbart, welches zur Ausbildung von anti-mikrobiell wirksamen Oberflächen dient.

Die DE 10 2011 085 862 A1 offenbart ferner eine Zusammensetzung mit wenigstens einem antimikrobiell wirksamen Wirkstoff, der bei Kontakt mit einem wässrigen Medium als Protonendonator fungiert, wobei der wenigstens eine Wirkstoff zumindest teilweise mit wenigstens einem Beschichtungsmaterial ummantelt ist, wobei das Beschichtungsmaterial eine geringere Wasserlöslichkeit als der Wirkstoff besitzt.

Die WO 2008/058707 A2 zeigt die Verwendung eines anorganischen Stoffes, der in Kontakt mit einem wässrigen Medium Wasserstoff-Kationen bildet, die eine antimikrobielle Wirkung auslösen, wobei der Stoff Molybdän und/oder Wolfram enthält.

Aus der DE 10 2007 061 965 A1 ist ein Kühlturm bekannt, bei dem durch Einbauten aus Verbundwerkstoffen und/oder Werkstoffverbünden und einem antimikrobiell wirksamen Stoff, der Wolfram und/oder Molybdän enthält, die Kontamination mit Mikroorganismen und deren Vermehrung vermieden werden kann.

Die DE 600 22 344 T2 betrifft ein Körperpflegeprodukt mit anti-mikrobieller Wirksamkeit, ausgewählt aus anti-mikrobiellen, wegwerfbaren absorbierenden Gegenständen, Zahnbürsten oder Babyschnullern.

Weitere anti-mikrobiell wirksame Oberflächen von Gegenständen sind aus der DE 199 36 059 A1, der DE 103 42 258 A1, der DE 103 23 448 A1, der DE 101 20 802 A1, der DE 100 13 248 A1, der WO 95/020878 A1 sowie der DE 10 2013 101 909 A1 bekannt.

Derartige anti-mikrobielle Beschichtungen bzw. Gegenstände weisen allerdings eine nicht immer zufriedenstellende Beschichtungsgüte bzw. -wirksamkeit sowie aufwendig und komplex handhabbare Beschichtungsverfahren auf.

Wünschenswert wäre es daher, eine anti-mikrobielle Beschichtung durch Vereinfachung des eigentlichen Beschichtungsvorgangs bereitzustellen.

Es ist daher die Aufgabe der vorliegenden Erfindung, eine anti-mikrobielle Beschichtung der eingangs genannten Art in vorteilhafter Weise weiterzubilden, insbesondere dahingehend, dass der Beschichtungsvorgang der anti-mikrobiellen Beschichtung vereinfacht und variabler gestaltet werden kann und dass deren Haftungseigenschaften verbessert werden können.

Diese Aufgabe wird erfindungsgemäß gelöst durch eine anti-mikrobielle Beschichtung mit den Merkmalen des Anspruchs 1.

Die Erfindung basiert auf dem Grundgedanken, dass durch Aufragen einer das Metalloxid und/oder Metallsalz enthaltenden wässrigen Lösung in Mikrotröpfchenform auf das Substrat, die feste anti-mikrobielle Beschichtung durch Verdunstung ausgebildet wird. Das Metalloxid und/oder das Metallsalz sind dazu in der wässrigen Lösung sehr gut löslich oder suspendierbar. Dazu weist die wässrige Lösung / Suspension einen Nitratgehalt von ca. 28 % auf. Ferner weisen insbesondere Metalloxide (z.B. TiO₂) alleine oder in Verbindung mit Metallsalzen besonders gute und wirksame anti-mikrobielle Eigenschaften auf, wodurch sich diese Verbindungsarten durch gezielte Änderung der Zusammensetzung besonders gut für eine verbesserte anti-mikrobielle Wirkung der Beschichtung eignen. Der große Vorteil dieses Beschichtungsverfahrens besteht außerdem darin, dass die während des Sprayvorgangs geladenen Tröpfchen auf den dazu gegenteilig geladenen Beschichtungsoberflächen einen geeigneten Entladungspartner finden und von diesem somit automatisch angezogen werden. Dadurch werden die Haftungseigenschaften der Mikrotröpfchen und der sich daraus ausbildenden antimikrobiellen Beschichtung signifikant verbessert. Damit wird auch der unerwünschte Effekt einer Feinstaubbelastung während des Auftragens verringert. Folglich werden einerseits die flächenspezifische Dichte der anti-mikrobiellen Beschichtung und andererseits ihre Haftungseigenschaften und Langlebigkeit verbessert.

Im Übrigen kann vorgesehen sein, dass die Beschichtung wenigstens eine Komplexverbindung gemäß dem Anspruch 2 enthält. Mittels der Komplexverbindung können zusätzliche, je nach Zusammensetzung der anti-mikrobiellen Beschichtung, neue Eigenschaften der anti-mikrobiellen Beschichtung erzeugt werden. So ist in diesem Zusammenhang beispielsweise denkbar, dass die anti-mikrobielle Wirksamkeit der Beschichtung durch die Komplexverbindung verstärkt wird.

Der Aufbau des Metalloxids kann gemäß einer ersten Alternative durch die Formel A_{c}O_{d} beschrieben sein, wobei A aus den Elementen der Gruppe 4 des Periodensystems der Elemente (IUPAC Nomenklatur) ausgewählt ist und O das Element Sauerstoff ist, wobei c und d unabhängig voneinander einen Wert zwischen 0 und 24 (also nicht 0 und 24) einnehmen können. Die Verwendung des Metalloxids mit den Metallen der Gruppe 4 des Periodensystems der Elemente (kurz: PSE) sorgen für eine sehr gute anti-mikrobielle Wirksamkeit dieser Beschichtung. Durch gezielte Auswahl der Zusammensetzung, charakterisiert durch die Indizes c und d können diese Eigenschaften noch freier und gezielter beeinflusst werden. Es sei an dieser Stelle angemerkt, dass sich die Bezeichnung der Gruppe 4 des PSE auf die aktuelle Konvention der IUPAC bezieht. Auch alle anderen im Rahmen dieser Offenbarung aufgeführten Bezeichnungen von Gruppen des PSE beziehen sich dabei auf die aktuelle Konvention der IUPAC.

Zudem ist denkbar, dass der Aufbau des Metalloxids durch die Formel AO₂ beschrieben ist, wobei A aus den Elementen der Gruppe 4 des Periodensystems der Elemente (IUPAC Nomenklatur) ausgewählt ist und O das Element Sauerstoff ist, wobei insbesondere das Metalloxid TiO₂, ZrO₂ oder HfO₂ ist. Insbesondere die Metalldioxide der Gruppe 4 des PSE weisen eine sehr gute anti-mikrobielle Wirksamkeit auf und eignen sich daher in besonders vorteilhafter Weise für den Einsatz in der anti-mikrobiellen Beschichtung. Folglich lässt sich die anti-mikrobielle Wirksamkeit der Beschichtung weiter erhöhen.

Der Aufbau des Metalloxids kann gemäß einer zweiten Alternative durch die Formel MeₑO_{d} beschrieben sein, wobei Me aus den Elementen der Gruppe 6 des Periodensystems der Elemente (IUPAC Nomenklatur) ausgewählt ist und O das Element Sauerstoff ist, wobei d und e unabhängig voneinander einen Wert zwischen 0 und 24 (insbesondere nicht 0 und 24) einnehmen können. Ein derartiger Aufbau des Metalloxids ermöglicht vielfältige katalytische Eigenschaften der anti-mikrobiellen Beschichtung. In diesem Zusammenhang sind insbesondere aus Molybdän Mo und Wolfram W aufgebaute Metalloxide zu nennen, da entsprechende Chromverbindungen eine sehr ausgeprägte Toxizität aufweisen. Als Wirkmechanismus können deren Redox-Potential und deren saure Eigenschaften genannt werden, was sich zusätzlich positiv auf die Wirksamkeit der anti-mikrobiellen Beschichtung auswirkt.

Gemäß einem Beispiel kann es vorgesehen sein, dass der Aufbau der Komplexverbindung durch die Formel A_{c}B_{d}XₙMeₑB_{f} oder XₙMeₑB_{f} beschrieben ist, wobei A aus den Elementen der Gruppe 4, B aus den Elementen der Gruppe 15 oder 16, X aus den Elementen der Gruppen 5, 7, 8, 9, 10, 11, 12, 13, 14, der Lanthanoide oder der Actinoide sowie Me aus den Elementen der Gruppe 6 des Periodensystems der Elemente (IUPAC Nomenklatur) ausgewählt ist, und wobei c, d, n, e und f unabhängig voneinander einen Wert zwischen 0 und 24 einnehmen können. Da auch Komplexverbindungen dieser Art gute anti-mikrobielle Eigenschaften aufweisen, ist der Einsatz dieser Art von Komplexverbindungen in einer anti-mikrobiellen Beschichtung ebenfalls besonders vorteilhaft. In diesem Zusammenhang ist es ebenfalls vorstellbar, dass derartige Komplexverbindungen in Form einer Suspension oder als Feststoff nach dem Trocknen zu Lacken und Farben (z.B. Anti-Fouling-Lacke oder Farben) zugegeben werden, die damit anti-mikrobielle Eigenschaften erhalten.

Ebenfalls ist es gemäß einem anderen Beispiel vorstellbar, dass der Aufbau der Komplexverbindung durch die Formel AO₂XₙMeO₄ oder XₙMeO₄ beschrieben ist, wobei A aus den Elementen der Gruppe 4, X aus den Elementen der Gruppen 5, 7, 8, 9, 10, 11, 12, 13, 14, der Lanthanoide oder der Actinoide sowie Me aus den Elementen der Gruppe 6 des Periodensystems der Elemente (IUPAC Nomenklatur) ausgewählt ist und O das Element Sauerstoff ist, wobei n einen Wert zwischen 0 und 24 einnehmen kann, und wobei die Komplexverbindung insbesondere Molybdate, Wolframate oder Chromate enthält. Die Komplexverbindung der Formel AO₂XₙMeO₄ weist insbesondere einen Synergieefekt im Hinblick auf die Verstärkung der antimikrobiellen Eigenschaften bzw. Wirkungen der anti-mikrobiellen Beschichtung auf. Denn eine Komplexverbindung der Formel AO₂XₙMeO₄ hat eine stärkere antimikrobielle Wirksamkeit als ihre Bestandteile mit den Formeln AO₂ bzw. XₙMeO₄. Die Komplexverbindungen mit dieser Zusammensetzung liegen insbesondere teilweise in Form von farblosen Komplexen der Form TiO₂*XₙMeO₄ und lassen sich besonders vorteilhaft in Kunststoffe (z.B. Silicon, PU, etc.) oder Baustoffe (z.B. Zement) einarbeiten, die dadurch anti-mikrobielle Eigenschaften, zumindest an ihrer Oberfläche, aufweisen.

Darüber hinaus ist denkbar, dass der Aufbau der Komplexverbindung beispielweise durch die Formel AO₂MeₑO_{d} beschrieben ist, wobei A aus den Elementen der Gruppe 4, Me aus den Elementen der Gruppe 6 des Periodensystems der Elemente (IUPAC Nomenklatur) ausgewählt ist und O das Element Sauerstoff ist, wobei d und e unabhängig voneinander einen Wert zwischen 0 und 24 einnehmen können. Da auch diese Art der Komplexverbindung verstärkende Auswirkungen auf die anti-mikrobielle Wirksamkeit der anti-mikrobiellen Beschichtung hat, ist auch ihre Verwendung diesbezüglich besonders vorteilhaft.

Erfindungsgemäss handelt es sich bei der Komplexverbindung um eine solche aus Molybdaten mit TiO₂ oder Wolframaten mit TiO₂, wobei die Molybdate (NH₄)₆Mo₇O₂₄, Na₂MoO₄, Ag₂MoO₄, Al₂(MoO₄)₃, CeMoO₄, CoMoO₄, CuMoO₄, Fe-III-MoO₄, MnMoO₄, NiMoO₄ oder ZnMoO₄ umfassen, und die Wolframate Na₂WO₄, AgWO₄, AlWO₄ CeWO₄, CoWO₄, CuWO₄, Fe-III-WO₄, MnWO₄, NiWO₄ oder ZnWO₄ umfassen.

Der Aufbau des Metallsalzes ist durch die Formel XBO₃ beschrieben, wobei X aus den Elementen der Gruppen 5, 7, 8, 9, 10, 11, 12, der Lanthanoide oder der Actinoide sowie B aus den Elementen der Gruppe 15 des Periodensystems der Elemente (IUPAC Nomenklatur) ausgewählt ist und O das Element Sauerstoff ist, und wobei insbesondere das Metallsalz AgNO₃ ist. Weiterhin ist möglich, dass der Aufbau des Metalloxids und Metallsalzes durch die Formel AO₂XBO₃ beschrieben ist, wobei A aus den Elementen der Gruppe 4, X aus den Elementen der Gruppen 5, 7, 8, 9, 10, 11, 12, der Lanthanoide oder der Actinoide sowie B aus den Elementen der Gruppe 15 des Periodensystems der Elemente (IUPAC Nomenklatur) ausgewählt ist und O das Element Sauerstoff ist, und wobei insbesondere das Metalloxid und Metallsalz TiO₂AgNO₃ ist. Diese Art des Metalloxids und/oder Metallsalzes hat insbesondere verstärkende Auswirkungen auf die anti-mikrobielle Wirksamkeit der anti-mikrobiellen Beschichtung bei verdunkelten Umgebungsbedingungen.

Insbesondere dort also, wo die Beschichtung unter wenig Lichteinfall Verwendung findet, z.B. zur Innenbeschichtung von Rohrleitungen oder bei Implantaten, ist auch ihre Verwendung besonders vorteilhaft.

Zusätzlich ist die Beschichtung in Form einer Matrixstruktur ausgebildet ist, wobei die Matrixstruktur mehrere zueinander beabstandete Inseln aufweist, und wobei die Inseln einen Durchmesser in einem Bereich insbesondere von ca. 0,1 µm bis ca. 500 µm, vorzugsweise von ca. 1 µm bis ca. 200 µm, besonders bevorzugt von ca. 2 µm bis ca. 100 µm aufweisen, und wobei die Inseln jeweils entsprechend ihres Durchmessers zueinander beabstandet sind. Die enge Beabstandung der einzelnen Inseln zueinander erlaubt ihre homogene Verteilung auf dem Substrat und daraus resultierend eine hohe anti-mikrobielle Wirksamkeit der Beschichtung bei einem gleichzeitig optimierten Materialeinsatz der verwendeten Metalloxide bzw. Metallsalze. Da die Inseln mittels des zuvor genannten elektrostatischen Sprayverfahrens auf das Substrat aufgetragen sind, kann zudem ihre Haftung auf dem Substrat verbessert werden. Diesbezüglich verdunsten die aufgesprayten und abgeschiedenen Mikrotröpfchen (z.B. bei Raumtemperatur) sehr schnell innerhalb von nur 1 bis 2 Minuten und hinterlassen eine transparente TiO₂-Matrix in Form dieser Inseln.

Ferner ist vorstellbar, dass die Inseln TiO₂ und ZnMoO₄ enthalten. Seit längerem sind die sehr wirkungsvollen anti-mikrobiellen Eigenschaften von TiO₂ bekannt. Diese lassen sich durch die Zugabe von ZnMoO₄ im Vergleich zu den beiden Einzelkomponenten synergetisch erhöhen, wodurch sich die anti-mikrobielle Wirksamkeit der Beschichtung insgesamt weiter erhöhen lässt. Ein weiterer wesentlicher Aspekt, wasserlösliches Titandioxid mittels der Suspension oder wässrigen Lösung auf das Substrat aufzutragen und damit als Grundmatrix zu arbeiten, ist die positive Ladung im festen Zustand. Diese positive Ladung des Titandioxids behält es insbesondere nach Abscheidung aus dem wässrig-sauren Milieu (pH < 6,8) auch im trockenen Zustand bei. Hierbei treten sowohl Spezies der Form Ti-O(H⁺)-Ti als auch O-Ti⁺-O auf. Des Weiteren sind Verbindungen mit einer permanenten positiven Ladung (z.B. quartäre Ammoniumverbindungen wie PHMB) dafür bekannt, dass sie die in ihrer Außenhülle negativ polaren Bakterien anziehen und damit einen Rücktransport in ihren jeweiligen Lebensraum verhindern. Zudem führt die positive Ladung zu einer strukturellen Veränderung der Bakterienmembran und einer Dysfunktion der Ionenkanäle. Damit wird die Zellhomöostase aus dem Gleichgewicht gebracht und der Mikroorganismus stirbt noch wirkungsvoller ab.

Auch denkbar ist, dass die Inseln eine Oberfläche aufweisen, die pfannenartig mit einem Zentralbereich und einem sich diesbezüglich radial nach außen erhebenden Randbereich ausgebildet ist. Diese Art der Formgebung erhöht insbesondere die Oberfläche der Inseln, wodurch sich einerseits eine größere wirksame Oberfläche der einzelnen Inseln erzeugen lässt. Andererseits wird dadurch auch die gesamte wirksame Oberfläche der anti-mikrobiellen Beschichtung erhöht. Durch die pfannenartige Struktur der einzelnen Inseloberflächen kann zudem insbesondere der abgesenkte Zentralbereich der einzelnen Inseln vor mechanischen Einwirkungen, z.B. durch ein Reinigungstuch, besser geschützt werden, womit sich die Langlebigkeit der anti-mikrobiellen Beschichtung zusätzlich erhöhen lässt.

Überdies ist möglich, dass die Inseln eine konvexe Oberfläche aufweisen, die mit einem Zentralbereich und einem sich diesbezüglich radial nach außen abflachenden Randbereich ausgebildet ist. Diese Art der konvexen Formgebung erhöht ebenfalls die Oberfläche der einzelnen Inseln, wodurch sich einerseits eine größere wirksame Oberfläche der einzelnen Inseln erzeugen lässt. Andererseits wird dadurch auch die gesamte wirksame Oberfläche der anti-mikrobiellen Beschichtung erhöht.

Weiter kann vorgesehen sein, dass die Oberfläche der Inseln eine gefurchte Struktur aufweist, wobei die Furchen jeweils eine Breite von insbesondere ca. 10 µm, vorzugsweise von ca. 5 µm, besonders bevorzugt von ca. 2 µm aufweisen, so dass die Oberfläche der Inseln der Matrixstruktur vergrößert wird. Die Furchungen erhöhen, wie bereits vorstehend beschrieben, noch zusätzlich die wirksame Oberfläche der einzelnen Inseln und folglich auch der gesamten Oberfläche der anti-mikrobiellen Beschichtung. Damit kann die anti-mikrobielle Wirksamkeit der gesamten Beschichtung verbessert bzw. gesteigert werden.

Zudem vorstellbar ist, dass die Oberfläche der Beschichtung hydrophile Eigenschaften aufweist. Die hydrophilen Eigenschaften der Beschichtung verbessern deren antimikrobielle Wirksamkeit zusätzlich. Dieser Sachverhalt kann damit erklärt werden, dass hydrophile Oberflächen, im Gegensatz zu hydrophoben Oberflächen, Bakterien bzw. Mikroorganismen auf der Oberfläche binden und einen Rücktransfer ihren Lebensraum, z.B. die Raumluft oder Wasser, verhindern. Zudem erleichtern die hydrophilen Eigenschaften die Reinigung der anti-mikrobiellen Beschichtung, da sich zwischen dem Schmutz (z.B. Zelldebris) und der Oberfläche eine monomolekulare Wasserschicht ausbildet.

Außerdem ist denkbar, dass die anti-mikrobiellen Eigenschaften der Beschichtung von Lichteinfall, insbesondere UV-Lichteinfall, unabhängig vorhanden sind. Die Unabhängigkeit gewisser Beschichtungsverbindungen vom Lichteinfall hat insbesondere unter verdunkelten Umgebungsbedingungen der anti-mikrobiellen Beschichtung erhebliche Vorteile (z.B. TiO₂*AgNO₃). Schließlich kann so der Einsatz der anti-mikrobiellen Beschichtung deutlich variabler gestaltet bzw. in seinen Einsatzbedingungen erweitert werden. In diesem Zusammenhang sind beispielsweise Einsatzbedingungen in Gegenständen oder Bauteilen vorstellbar, die nur teilweise oder nie unter Lichteinfall stehen. Unter Lichteinfall kann im Rahmen dieser Erfindung insbesondere auch ein UV-Lichteinfall aus einer natürlichen und/oder nicht-natürlichen Lichtquelle (z.B. im Außenbereich) verstanden werden. Dies können z.B. Beschichtungen von Rohrleitungen oder Behältern, Implantaten Filtern, Hygieneartikeln, Kathedern, Klebstoffen, Körperpflegemitteln, Lacken, Polymerwerkstoffen, Prothesen, Stants, Silikonmembranen, Wundauflagen, Armaturen, Kreditkarten, Gehäusen, Münzen, Geldscheinen, Teile der Innenausstattung von öffentlichen Verkehrsmitteln usw. sein.

Des Weiteren ist möglich, dass die anti-mikrobiellen Eigenschaften der Beschichtung durch Lichteinfall, insbesondere UV-Lichteinfall, verstärkbar sind. Die Verstärkung der anti-mikrobiellen Beschichtung durch UV-Lichteinfall hat insbesondere den Vorteil einer noch stärkeren anti-mikrobiellen Wirksamkeit dieser Beschichtung. Da der Einsatz der anti-mikrobiellen Beschichtung häufig unter belichteten oder teilweise belichteten Bedingungen stattfindet, kann so der Einsatz der anti-mikrobiellen Beschichtung nochmals deutlich variabler gestaltet bzw. erweitert werden.

Die Erfindung betrifft auch ein elektrostatisches Sprayverfahren zum Beschichten wenigstens eines Substrats, das wenigstens die folgenden Schritte umfasst:
- Bereitstellen eines Substrats;
- Beschichten des Substrates mit einer wässrigen Lösung oder Suspension in Tröpfchenform durch das elektrostatische Sprayverfahren, wobei die wässrige Lösung oder Suspension wenigstens ein darin lösliches Metalloxid mit einem Aufbau des Metalloxids gemäß Anspruch 1 und/oder wenigstens ein Metallsalz mit einem Aufbau des Metallsalzes gemäß Anspruch 1 enthält, wodurch die wässrige Lösung oder Suspension antimikrobielle Eigenschaften aufweist; und
- Ausbilden einer festen, anti-mikrobiellen Beschichtung auf dem Substrat in Form einer Matrixstruktur durch Verdunsten der wässrigen und/oder flüssigen Phase aus der wässrigen Lösung oder Suspension, so dass das Metalloxid und/oder das Metallsalz in der Matrixstruktur der Beschichtung enthalten sind,
wobei die Beschichtung in Form einer Matrixstruktur ausgebildet ist, wobei die Matrixstruktur mehrere zueinander beabstandete Inseln aufweist, und wobei die Inseln einen Durchmesser in einem Bereich insbesondere von ca. 0,1 µm bis ca. 500 µm, vorzugsweise von ca. 1 µm bis ca. 200 µm, besonders bevorzugt von ca. 2 µm bis ca. 100 µm aufweisen, und wobei die Inseln jeweils entsprechend ihres Durchmessers zueinander beabstandet sind.

Vor allem im Hinblick auf verbesserte Haftungseigenschaften der anti-mikrobiellen Beschichtung auf dem Substrat ist das elektrostatische Sprayverfahren besonders vorteilhaft. Mittels des elektrostatischen Sprayverfahrens finden zunächst die geladenen Tröpfchen auf dem gegenteilig geladenen Substrat einen gegenteiligen Entladungspartner, so dass die von diesem automatisch angezogen werden. Damit reduziert sich auch das Risiko einer Feinstaubbelastung während des Auftragens. Wie vorstehend beschrieben, verdunsten sodann nach dem Besprühen des Substrats die darauf abgeschiedenen Mikrotröpfchen (z.B. bei Raumtemperatur) sehr schnell innerhalb von nur 1 bis 2 min und hinterlassen eine transparente Matrix der Beschichtungskomponenten (insbesondere eine TiO₂ Matrix) in Form kleiner Inseln.

Insbesondere kann vorgesehen sein, dass das Metalloxid vor der Zugabe zu der wässrigen Lösung oder Suspension in Form von Nanopartikeln mit einer mittleren Größe von insbesondere kleiner als ca. 100 nm, vorzugsweise kleiner als ca. 20 nm, besonders bevorzugt kleiner als ca. 10 nm vorliegt, und wobei die wässrige Lösung oder Suspension einen pH-Wert von insbesondere kleiner oder gleich ca. 6,8, vorzugsweise kleiner oder gleich ca. 2, besonders bevorzugt kleiner oder gleich ca. 1,5 aufweist. Da das Metalloxid, z.B. TiO₂, vor der Zugabe zu der wässrigen Lösung oder Suspension in Form von Nanopartikeln vorliegt, ist es sehr gut wasserlöslich. Die gute Wasserlöslichkeit wird durch die sinkende Größe der einzelnen Nanopartikel zusätzlich verstärkt, wodurch folglich eine Größe der Nanopartikel von kleiner als ca. 10 nm in diesem Zusammenhang besonders vorteilhaft ist. Zudem kann ein dazu geeignetes Metalloxid (z.B. TiO₂) nach Abscheidung aus dem wässrig-sauren Milieu (pH < 6,8) diese positive Ladung auch im trockenen Zustand beibehalten. Dadurch ergibt sich eine noch bessere Wirksamkeit der anti-mikrobiellen Beschichtung.

Ebenso ist vorstellbar, dass das Metalloxid in der wässrigen Lösung oder Suspension in einem Bereich insbesondere von ca. 0,005 % bis ca. 20 %, vorzugsweise von ca. 0,01 % bis ca. 10 %, besonders bevorzugt von ca. 0,1 % bis ca. 2 % enthalten ist. Mit dem elektrostatischen Sprayverfahren lassen sich wässrige Lösungen insbesondere mit einem Metalloxid-Gehalt von 0,01 bis 10% auftragen. Für die später daraus resultierenden festen Matrices der Metalloxide ist eine Verwendung von einem Gehalt von 1,5% (15 g/L) besonders vorteilhaft. Die Endkonzentration beträgt dann besonders vorteilhaft ca. 50 mg/m² (= 50 µg/cm²).

Zudem ist es denkbar, dass die wässrige Lösung oder Suspension wenigstens eine Komplexverbindung enthält. Durch Komplexverbindungen können insbesondere die keimreduzierenden bzw. anti-mikrobiellen Eigenschaften der Beschichtung vorteilhaft variiert bzw. erweitert werden. Hierdurch lassen sich beispielsweise die antimikrobielle Wirksamkeit der Beschichtung verbessern oder auf äußerliche Umstände wie Lichteinfall bzw. UV-Lichteinfall oder kein Lichteinfall anpassen.

Weiterhin kann vorgesehen sein, dass wenigstens während dem Beschichten des Substrats das Substrat elektrisch positiv oder negativ geladen ist und die Tröpfchen der wässrigen Lösung oder Suspension elektrisch positiv oder negativ geladen sind. Besonders wichtig ist in diesem Zusammenhang anzumerken, dass die Tröpfchen immer eine gegenteilige Ladung zu dem Substrat aufweisen müssen, so dass es zu einem verbesserten und besonders vorteilhaften Auftragen der Beschichtung kommen kann und sich daraus resultierend verbesserte Haftungseigenschaften der Beschichtung im festen Zustand überhaupt erst ergeben können.

Die Erfindung betrifft auch die Verwendung eines wenigstens ein Metalloxid mit einem Aufbau des Metalloxids gemäß Anspruch 1 und optional wenigstens ein Metallsalz mit einem Aufbau des Metallsalzes gemäß Anspruch 1 enthaltenden Beschichtungsmaterials zur Erzeugung einer anti-mikrobiellen Beschichtung auf einer Oberfläche eines Substrats, wobei die Beschichtung wenigstens das Metalloxid und optional wenigstens das Metallsalz enthält, wobei die Beschichtung in Form einer Matrixstruktur ausgebildet ist, wobei die Matrixstruktur mehrere zueinander beabstandete Inseln aufweist, und wobei die Inseln einen Durchmesser in einem Bereich insbesondere von ca. 0,1 µm bis ca. 500 µm, vorzugsweise von ca. 1 µm bis ca. 200 µm, besonders bevorzugt von ca. 2 µm bis ca. 100 µm aufweisen, und wobei die Inseln jeweils entsprechend ihres Durchmessers zueinander beabstandet sind. Wie bereits vorstehend erläutert weisen insbesondere Metalloxide (z.B. TiO₂) alleine oder in Verbindung mit Metallsalzen besonders gute und wirksame anti-mikrobielle Eigenschaften auf, wodurch sich diese Verbindungsarten besonders vorteilhaft für eine verbesserte und variationsreichere anti-mikrobielle Wirkung der Beschichtung eignen. Das Beschichtungsmaterial kann ebenfalls in Form eines Anti-fouling-Lackes und/oder einer Anti-Fouling-Farbe ausgebildet sein, wobei dem Beschichtungsmaterial wenigstens ein Komplex, insbesondere wenigstens ein TiO₂*XₙMeO₄-Komplex, in Form einer Suspension oder als Feststoff nach dem Trocknen zugegeben wird.

Weiterhin ist es denkbar, dass die Beschichtung eine anti-mikrobielle Beschichtung wie vorstehend beschrieben ist und/oder dass die Beschichtung durch ein elektrostatisches Sprayverfahren wie ebenfalls vorstehend beschrieben erhalten wird. Wie bereits vorstehend erläutert, besteht der große Vorteil dieses Beschichtungsverfahrens darin, dass die während des Sprayvorgangs geladenen Tröpfchen auf dem dazu gegenteilig geladenen Substrat einen wirkungsvollen Entladungspartner finden und von diesem somit automatisch angezogen werden. Dadurch werden die Haftungseigenschaften der Mikrotröpfchen und der sich daraus ausbildenden anti-mikrobiellen Beschichtung signifikant verbessert.

Zusätzlich ist es denkbar, dass eine Oberfläche der Beschichtung eine Arbeitsfläche ist und/oder mit der Umgebungsluft und/oder Fluiden und/oder Flüssigkeiten wenigstens temporär in Kontakt steht. Im Falle einer Arbeitsfläche (z.B. Schreibtisch oder Tatstatur) kann durch die erfindungsgemäße, anti-mikrobielle Beschichtung die Keimbelastung eines Nutzers spürbar verringert werden, was sich insbesondere positiv auf dessen Wohlbefinden und Gesundheit auswirkt. Zur Steigerung der Luftqualität z.B. in Wohn- oder Reinräumen ist die erfindungsgemäße, anti-mikrobielle Beschichtung ebenfalls sehr vorteilhaft, da sich so z.B. die verringerte Partikelbeladung der Luft positiv auf die Produktionsbedingungen in den Reinräumen (weniger fehlerhafte Bauteile) oder die Luftqualität in den Wohnräumen weiter verbessern lässt. Zur Verbesserung der Trinkwasserqualität lässt sich die antimikrobielle Beschichtung z.B. als Innenbeschichtung an Trinkwasserrohre, -behälter und -armaturen auftragen.

Weitere Einzelheiten und Vorteile der Erfindung sollen nun anhand der in den Zeichnungen dargestellten Ausführungsbeispiele näher erläutert werden.

Es zeigen:
- Fig. 1: in einer vergrößerten REM-Darstellung eine Draufsicht eines ersten Ausführungsbeispiels einer erfindungsgemäßen anti-mikrobiellen Beschichtung;
- Fig. 2: in zwei vergrößerten Darstellungen jeweils eine Draufsicht des ersten Ausführungsbeispiels der Beschichtung gemäß Fig. 1;
- Fig. 3: in zwei vergrößerten, perspektivischen Darstellungen die hydrophilen Eigenschaften des ersten Ausführungsbeispiels der Beschichtung gemäß Fig. 1;
- Fig. 4: eine allgemeine tabellarische Charakterisierung der anti-mikrobiellen Wirksamkeit (gemäß ISO 22196) von anti-mikrobiellen Beschichtungen;
- Fig. 5: eine tabellarische Darstellung der anti-mikrobiellen Wirksamkeit weiterer Ausführungsbeispiele einer erfindungsgemäßen anti-mikrobiellen Beschichtung;
- Fig. 6: zwei weitere tabellarische Darstellungen der anti-mikrobiellen Wirksamkeit weiterer Ausführungsbeispiele einer anti-mikrobiellen Beschichtung;
- Fig. 7: eine weitere tabellarische Darstellung der anti-mikrobiellen Wirksamkeit weiterer Ausführungsbeispiele einer anti-mikrobiellen Beschichtung;
- Fig. 8: eine weitere tabellarische Darstellung der anti-mikrobiellen Wirksamkeit weiterer Ausführungsbeispiele einer nicht erfindungsgemäßen antimikrobiellen Beschichtung;
- Fig. 9a: eine schematische Darstellung eines Ausführungsbeispiels eines elektrostatischen Sprayverfahrens zum Erhalt einer erfindungsgemäßen anti-mikrobiellen Beschichtung;
- Fig. 9b: eine vergrößerte Darstellung einer Insel;
- Fig. 10: ein Diagramm einer Gegenüberstellung der zeitlichen Keimreduktion eines Ausführungsbeispiels der erfindungsgemäßen Beschichtung gemäß Fig. 5 bei Dunkelheit und Helligkeit;
- Fig. 11: ein Balkendiagramm der anti-mikrobiellen Wirksamkeit eines Ausführungsbeispiels der erfindungsgemäßen Beschichtung gemäß Fig. 5 bei 2x-, 3x- und 5x-facher Beschichtung einer Petrischale;
- Fig. 12: ein Balkendiagramm mit einer Gegenüberstellung der zeitlichen Keimreduktion dreier Ausführungsbeispiele der erfindungsgemäßen Beschichtung gemäß Fig. 5 bei Dunkelheit und Helligkeit;
- Fig. 13a: ein Diagramm einer Gegenüberstellung der zeitlichen Keimreduktion zweier Ausführungsbeispiele der erfindungsgemäßen Beschichtung gemäß Fig. 5 bei Dunkelheit und Helligkeit;
- Fig. 13b: ausgewählte Datenpunkte aus Fig. 13a in tabellarischer Darstellung;
- Fig. 14a: eine tabellarische Darstellung der anti-mikrobiellen Wirksamkeit eines Ausführungsbeispiels der Beschichtung gemäß Fig. 5 gegenüber einem Staphylococcus aureus Keims;
- Fig. 14b: eine zeitliche Reduktionsentwicklung eines Aspergillus fumigatus Keims auf einer unbeschichteten und einer mit einem Ausführungsbeispiel der Beschichtung gemäß Fig. 5 beschichteten Petrischale;
- Fig. 15: eine zeitliche Reduktionsentwicklung eines Candida albicans Keims auf einer unbeschichteten und einer mit einem Ausführungsbeispiel der Beschichtung gemäß Fig. 5 beschichteten Petrischale; und
- Fig. 16a: ein Balkendiagramm mit einer Gegenüberstellung der zeitlichen E. coli Keimreduktion von sechs Ausführungsbeispielen der erfindungsgemäßen Beschichtung gemäß Fig. 5 und Fig. 6 sowie einer nicht erfindungsgemäßen Beschichtung bei Dunkelheit.

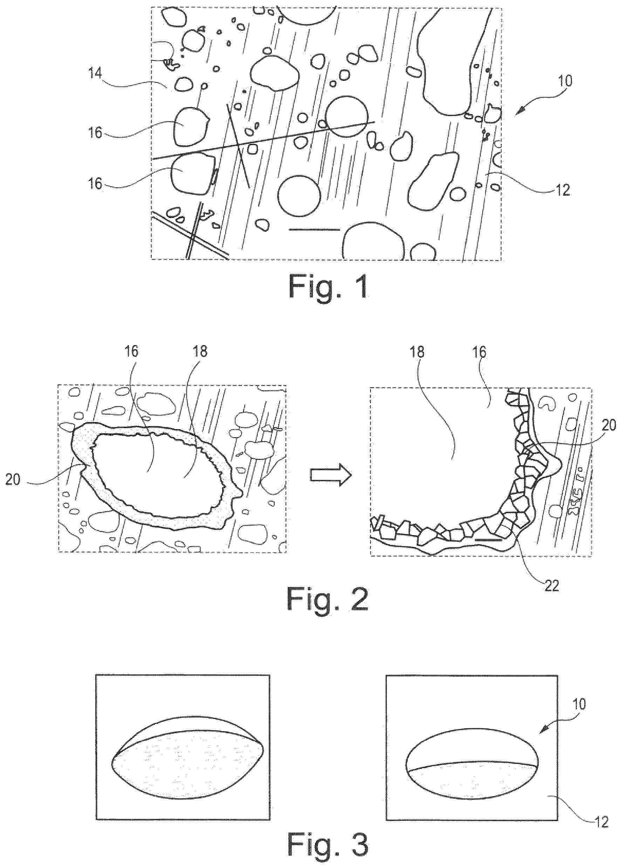

Fig. 1 zeigt in einer vergrößerten Darstellung eine Draufsicht eines ersten Ausführungsbeispiels einer erfindungsgemäßen anti-mikrobiellen Beschichtung 10 eines Substrats 12.

Die anti-mikrobielle Beschichtung 10 des Substrats 12 wird erhalten durch ein Anbringen der Beschichtung 10 auf einer Oberfläche 14 des Substrats 12 mittels eines elektrostatischen Sprayverfahrens.

Die Beschichtung 10 enthält wenigstens ein Metalloxid.

Der Aufbau des Metalloxids wird durch die Formel A_{c}O_{d} beschrieben.

Dabei ist A aus den Elementen der Gruppe 4 des Periodensystems der Elemente (IUPAC Nomenklatur) ausgewählt und O ist das Element Sauerstoff.

Die Inidizes c und d können ferner unabhängig voneinander einen Wert zwischen 0 und 24 einnehmen.

Der Aufbau des Metalloxids ist noch konkreter durch die Formel AO₂ beschrieben.

Hierbei ist A ebenfalls aus den Elementen der Gruppe 4 des Periodensystems der Elemente (IUPAC Nomenklatur) ausgewählt und O ist das Element Sauerstoff.

Das Metalloxid ist insbesondere TiO₂ (oder ZrO₂ bzw. HfO₂).

Die Beschichtung 10 gemäß Fig. 1 in Form einer Matrixstruktur ausgebildet, in welcher das TiO₂ enthalten ist.

Diese Matrixstruktur weist gemäß Fig. 1 mehrere zueinander beabstandete Inseln 16 auf.

Diese Inseln 16 haben einen Durchmesser in einem Bereich insbesondere von ca. 2 µm bis ca. 100 µm.

Zudem sind die Inseln 16 jeweils entsprechend ihres Durchmessers zueinander beabstandet.

Die Inseln 16 enthalten neben TiO₂ zudem AgNO₃.

In Fig. 2 sind zwei weitere vergrößerte Darstellungen jeweils einer Draufsicht des ersten Ausführungsbeispiels der Beschichtung gemäß Fig. 1 gezeigt.

Eine REM-Analyse einer Insel zeigt eine flache Pfanne im Zentralbereich 18 mit einer deutlichen Erhebung an den Rändern der TiO₂-Inseln.

Dementsprechend weisen die Inseln 16 eine Oberfläche auf, die pfannenartig mit einem Zentralbereich 18 und einem sich diesbezüglich radial nach außen erhebenden Randbereich 20 ausgebildet ist.

In einem weiteren Ausführungsbeispiel (nicht in den Figuren dargestellt) weisen die Inseln 16 eine konvexe Oberfläche auf.

Diese Oberfläche ist ebenfalls mit einem Zentralbereich und einem sich diesbezüglich radial nach außen abflachenden Randbereich ausgebildet.

Weiter sind in Fig. 2 die Oberflächen der Inseln 16 dargestellt, die eine gefurchte Struktur aufweist.

Die gefurchte Struktur ist insbesondere im Randbereich 20 der einzelnen Inseln 16 ausgebildet.

Die Furchen 22 weisen jeweils eine Breite von ca. 2 µm auf, so dass sich die Oberfläche der Inseln 16 der Matrixstruktur vergrößert.

Fig. 3 zeigt ebenfalls in zwei vergrößerten, perspektivischen Darstellungen die hydrophilen Eigenschaften des ersten Ausführungsbeispiels der Beschichtung 10 gemäß Fig. 1.

In den beiden Darstellungen der Fig. 3 ist diesbezüglich eine Gegenüberstellung einer unbeschichteten Oberfläche 12 (links) und einer beschichteten Oberfläche 12 (rechts) gezeigt.

Die Oberfläche der Beschichtung 10 mit den hydrophilen Eigenschaften (rechts) weist einen deutlich erkennbaren hydrophilen Effekt auf.

Dieser ist insbesondere an einer sichtbaren Abflachung der Wassertropfenform zu erkennen.

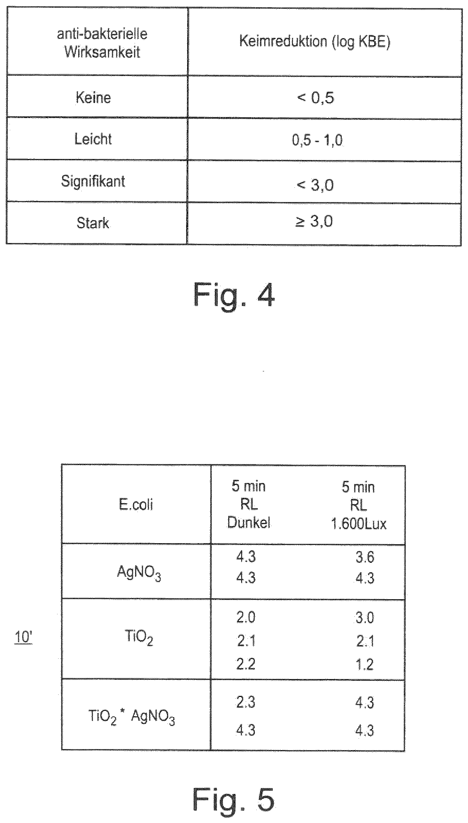

Fig. 4 zeigt eine tabellarische Charakterisierung der anti-mikrobiellen Wirksamkeit von anti-mikrobiellen Beschichtungen im Allgemeinen.

Die anti-mikrobielle bzw. anti-bakterielle Wirksamkeit verschiedener Beschichtungen kann gemäß Fig. 4 in "keine", "leicht", "signifikant" und "stark" klassifiziert werden.

Zur Quantifizierung der anti-mikrobiellen Wirksamkeit dient der Reduktionsfaktor R_{L}.

Dieser Reduktionsfaktor R_{L} kann durch folgenden mathematischen Zusammenhang darstellt werden: R_{L} = log (A/B).

Dabei entspricht A einem Mittelwert von sogenannten koloniebildenden Einheiten (KBE) pro ml auf einer Referenzoberfläche ohne anti-mikrobielle Beschichtung.

Folglich entspricht B einem Mittelwert der koloniebildenden Einheiten (KBE) pro ml auf einer Referenzoberfläche mit einer anti-mikrobiellen Beschichtung gemäß der vorliegenden Erfindung.

Die koloniebildenden Einheiten (KBE) können auch als spezifische Gesamtkeimzahl pro ml aufgefasst werden.

Zur objektiven Beurteilung der keimreduzierenden Wirkung von Oberflächen wird der international anerkannte JIS-Test (Japanese Industrial Standard Test, JIS Z 2801) verwendet, der in Europa der ISO 22196 entspricht.

Hierbei werden mit der Testsubstanz beschichtete Petrischalen zunächst mit einer Keimsuspension (z.B. E. coli oder Staphylococcus aureus) benetzt, mit einer Folie abgedeckt und anschließend bei 35°C und 95% Luftfeuchte inkubiert.

Die Experimente können hierbei im Dunkeln oder unter definierten Lichtbedingungen (z.B. durch LED-Licht bei 1600 Lux) durchgeführt werden.

Nach Ende der Inkubation wird die Anzahl der überlebenden Keime bestimmt und ein Reduktionsfaktor R_{L} wie zuvor beschrieben berechnet.

Fig. 5 zeigt eine tabellarische Darstellung der anti-mikrobiellen Wirksamkeit weiterer Ausführungsbeispiele einer erfindungsgemäßen anti-mikrobiellen Beschichtung 10'.

Die anti-mikrobielle Wirksamkeit gegenüber E. coli-Bakterien ist in Fig. 5 für eine Dauer von 5 min bei Dunkelheit sowie unter definierten Lichtbedingungen bei 1600 Lux angegeben.

Die in Fig. 5 gezeigten Ausführungsbeispiele der jeweiligen erfindungsgemäßen antimikrobiellen Beschichtung 10' weisen im Wesentlichen dieselben strukturellen (makroskopisch) und funktionalen Merkmale wie die in Fig. 1 und 2 gezeigten Ausführungsbeispiele auf.

Lediglich die folgenden Unterschiede sollen aufgezeigt werden:
Der Aufbau des Metalloxids und des Metallsalzes oder lediglich des Metallsalzes, die in der anti-mikrobiellen Beschichtung enthalten sind, ist gemäß Fig. 5 im Allgemeinen durch die Formel AO₂XBO₃ oder XBO₃ beschrieben.

Hierbei ist A aus den Elementen der Gruppe 4, X aus den Elementen der Gruppe 11 sowie B aus den Elementen der Gruppe 15 des Periodensystems der Elemente (IUPAC Nomenklatur) ausgewählt und O ist das Element Sauerstoff.

Insbesondere ist das Metalloxid und das Metallsalz TiO₂AgNO₃ bzw. ist das Metallsalz AgNO₃.

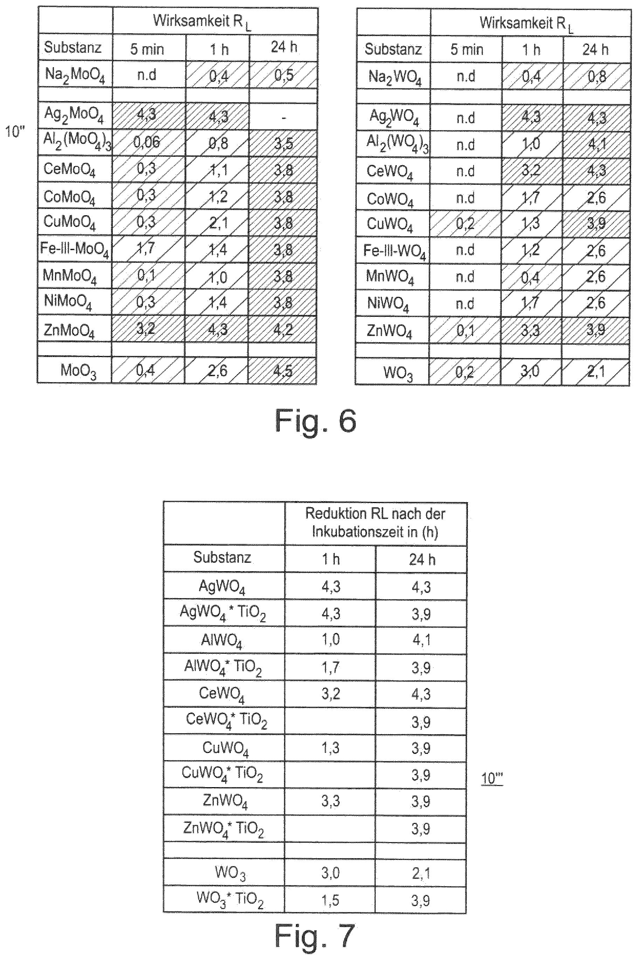

Fig. 6 zeigt links und rechts jeweils in der letzten Zeile eine weitere tabellarische Darstellung der anti-mikrobiellen Wirksamkeit weiterer Ausführungsbeispiele einer erfindungsgemäßen anti-mikrobiellen Beschichtung 10". In den übrigen Zeilen sind links und rechts jeweils Vergleichsbeispiele gezeigt.

Die anti-mikrobielle Wirksamkeit gegenüber E. coli-Bakterien ist in Fig. 6 für eine Dauer von 5 min, 1 h sowie 24 h unter definierten Lichtbedingungen bei 1600 Lux angegeben.

Die in Fig. 6 gezeigten Ausführungsbeispiele der jeweiligen anti-mikrobiellen Beschichtung 10" weisen im Wesentlichen dieselben strukturellen (makroskopisch) und funktionalen Merkmale wie die in Fig. 1 und 2 gezeigten Ausführungsbeispiele auf.

Lediglich die folgenden Unterschiede sollen aufgezeigt werden:
Die Beschichtung 10" enthält wenigstens eine Komplexverbindung.

Der Aufbau der Komplexverbindung ist im Allgemeinen durch die Formel A_{c}B_{d}XₙMeₑB_{f} oder XₙMeₑB_{f} beschrieben.

Hierbei ist A aus den Elementen der Gruppe 4, B aus den Elementen der Gruppe 15 oder 16, X aus den Elementen der Gruppen 5, 7, 8, 9, 10, 11, 12, 13, 14, der Lanthanoide oder der Actinoide sowie Me aus den Elementen der Gruppe 6 des Periodensystems der Elemente (IUPAC Nomenklatur) ausgewählt.

Zudem können c, d, n, e und f unabhängig voneinander einen Wert zwischen 0 und 24 einnehmen.

Insbesondere ist der Aufbau der Komplexverbindung durch die Formel AO₂XₙMeO₄ oder XₙMeO₄ beschrieben.

Hierbei ist A aus den Elementen der Gruppe 4, X aus den Elementen der Gruppen 5, 7, 8, 9, 10, 11, 12, 13, 14, der Lanthanoide oder der Actinoide sowie Me aus den Elementen der Gruppe 6 des Periodensystems der Elemente (IUPAC Nomenklatur) ausgewählt und O ist das Element Sauerstoff.

Ferner kann n einen Wert zwischen 0 und 24 einnehmen.

Die Komplexverbindung enthält gemäß Fig. 6 insbesondere Molybdate oder Wolframate.

Die Molybdate (Vergleichsbeispiele) umfassen insbesondere (NH₄)₆Mo₇O₂₄, Na₂MoO₄, Ag₂MoO₄, Al₂(MoO₄)₃, CeMoO₄, CoMoO₄, CuMoO₄, Fe-III-MoO₄, MnMoO₄, NiMoO₄ oder ZnMoO₄.

Die anti-mikrobielle Beschichtung 10" kann entweder aus diesen Molybdaten oder aus einer Verbindung dieser Molybdate mit TiO₂ ausgebildet sein.

Wie weiter aus Fig. 6 ersichtlich ist, kann die anti-mikrobielle Beschichtung 10" anstatt der Molybdate (Vergleichsbeispiele), erfindungsgemäß auch MoOs oder eine Verbindung aus TiO₂ und MoOs umfassen.

Die Wolframate (Vergleichsbeispiele) hingegen umfassen insbesondere Na₂WO₄, AgWO₄, AlWO₄, CeWO₄, CoWO₄, CuWO₄, Fe-III-WO₄, MnWO₄, NiWO₄ oder ZnWO₄.

Die anti-mikrobielle Beschichtung 10" kann entweder aus diesen Wolframaten ausgebildet sein (Vergleichsbeispiele) oder erfindungsgemäß aus einer Verbindung dieser Wolframate mit TiO₂.

Wie zusätzlich aus Fig. 6 ersichtlich ist, kann die anti-mikrobielle Beschichtung 10" erfindungsgemäß auch WO₃ oder eine Verbindung aus TiO₂ und WO₃ umfassen.

Fig. 7 zeigt eine weitere tabellarische Darstellung der anti-mikrobiellen Wirksamkeit weiterer Ausführungsbeispiele einer anti-mikrobiellen Beschichtung 10‴.

Erfindungsgemäß: WO₃ in der vorletzten Zeile sowie die gezeigten Verbindungen mit TiO₂. Nicht erfindungsgemäß: alle übrigen Ausführungsbeispiele.

Die anti-mikrobielle Wirksamkeit gegenüber E. coli-Bakterien ist in Fig. 7 für eine Dauer von 1 h sowie 24 h unter definierten Lichtbedingungen bei 1600 Lux angegeben.

Die in Fig. 7 gezeigten Ausführungsbeispiele der jeweiligen anti-mikrobiellen Beschichtung 10‴ weisen im Wesentlichen dieselben strukturellen (makroskopisch) und funktionalen Merkmale wie die in Fig. 1 und 2 gezeigten Ausführungsbeispiele auf.

Lediglich die folgenden Unterschiede sollen aufgezeigt werden:
Die Darstellung in der Fig. 7 dient insbesondere dazu, den Unterschied der antimikrobiellen Wirksamkeit der anti-mikrobiellen Beschichtung darzustellen, die einerseits aus einem Wolframat ausgebildet ist und andererseits aus diesem Wolframat in Verbindung mit TiO₂ ausgebildet ist.

Die Wolframate gemäß Fig. 7 umfassen insbesondere AgWO₄, AlWO₄, CeWO₄, CuWO₄, oder ZnWO₄ oder diese Wolframate in Verbindung mit TiO₂.

Zudem sind in der vorletzten bzw. letzten Zeile der in Fig. 7 gezeigten Tabelle ein weiteres Metalloxid und eine weitere Komplexverbindung gezeigt.

Der Aufbau dieses Metalloxids ist durch die Formel MeₑO_{d} beschrieben.

Dabei ist Me aus den Elementen der Gruppe 6 des Periodensystems der Elemente (IUPAC Nomenklatur) ausgewählt und O ist das Element Sauerstoff.

Ferner können d und e unabhängig voneinander einen Wert zwischen 0 und 24 einnehmen.

Das Metalloxid gemäß Fig. 7 ist insbesondere WO₃.

Der Aufbau der Komplexverbindung hingegen ist durch die Formel AO₂MeₑO_{d} beschrieben.

Hierbei ist A aus den Elementen der Gruppe 4, Me aus den Elementen der Gruppe 6 des Periodensystems der Elemente (IUPAC Nomenklatur) ausgewählt und O ist das Element Sauerstoff.

Zudem können d und e unabhängig voneinander einen Wert zwischen 0 und 24 einnehmen.

Die Komplexverbindung gemäß Fig. 7 ist insbesondere WO₃*TiO₂.

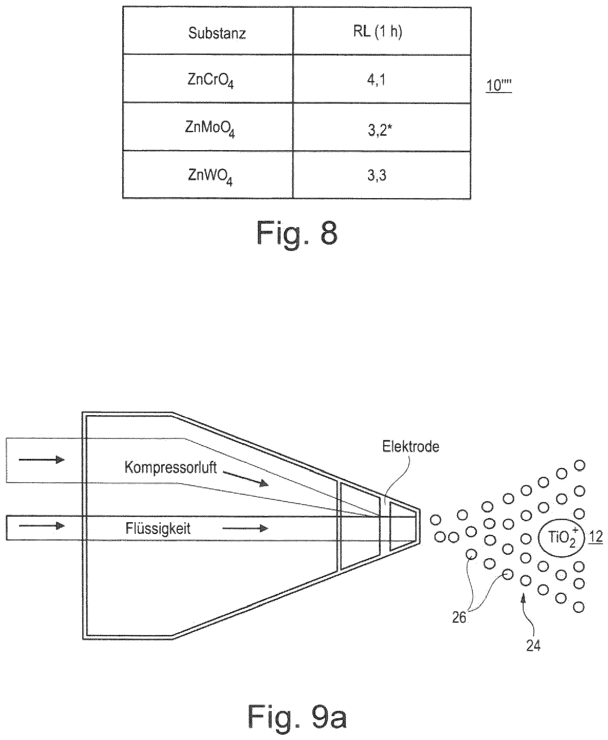

Fig. 8 ist eine weitere tabellarische Darstellung der anti-mikrobiellen Wirksamkeit weiterer Ausführungsbeispiele einer nicht erfindungsgemäßen anti-mikrobiellen Beschichtung 10ʺʺ gezeigt.

Die anti-mikrobielle Wirksamkeit gegenüber E. coli-Bakterien ist in Fig. 8 für eine Dauer von 1 h unter definierten Lichtbedingungen bei 1600 Lux angegeben.

Die in Fig. 8 gezeigten Ausführungsbeispiele der jeweiligen nicht erfindungsgemäßen anti-mikrobiellen Beschichtung 10ʺʺ weisen im Wesentlichen dieselben strukturellen (makroskopisch) und funktionalen Merkmale wie die in Fig. 1 und 2 gezeigten Ausführungsbeispiele auf.

Lediglich die folgenden Unterschiede sollen aufgezeigt werden:
Die Darstellung in Fig. 8 dient insbesondere dazu, den Unterschied der antimikrobiellen Wirksamkeit dieser anti-mikrobiellen Beschichtung 10ʺʺ mit verschiedenen Zusammensetzungen darzustellen.

Diese Beschichtung 10ʺʺ umfasst insbesondere ZnCrO₄ (Vergleichsbeispiel), ZnMoO₄ (Vergleichsbeispiel) oder ZnWO₄ (Vergleichsbeispiel).

Zwar weist Chromoxid eine starke toxische Wirkung auf.

Dennoch sollte mit der Zusammensetzung von Zinkchromat (ZnCrO₄) gemäß K₂CrO₄ + Zn(NO₃)₂ --> ZnCrO₄ + 2 KNO₃ das Prinzip der anti-mikrobiellen Wirkung von Metallsäuren der Form MeXO₄ der Gruppe 6 des Periodensystems der Elemente (IUPAC Nomenklatur) vervollständigt werden.

Fig. 9a zeigt eine schematische Darstellung eines Ausführungsbeispiels eines elektrostatischen Sprayverfahrens zum Erhalt einer erfindungsgemäßen antimikrobiellen Beschichtung 10, 10', 10", 10‴, 10"".

Das elektrostatische Sprayverfahren zum Beschichten wenigstens eines Substrats 12 umfasst dabei die folgenden Schritte:
- Bereitstellen eines Substrats 12;
- Beschichten des Substrates 12 mit einer wässrigen Lösung oder Suspension 24 in Tröpfchenform durch das elektrostatische Sprayverfahren, wobei die wässrige Lösung oder Suspension 24 wenigstens ein darin lösliches Metalloxid und/oder wenigstens ein Metallsalz enthält, wodurch die wässrige Lösung oder Suspension 24 anti-mikrobielle Eigenschaften aufweist; und
- Ausbilden einer festen, anti-mikrobiellen Beschichtung 10, 10', 10", 10‴, 10ʺʺ auf dem Substrat 12 in Form einer Matrixstruktur durch Verdunsten der wässrigen und/oder flüssigen Phase aus der wässrigen Lösung oder Suspension 24, so dass das Metalloxid und/oder das Metallsalz in der Matrixstruktur der Beschichtung 10, 10', 10", 10‴, 10ʺʺ enthalten sind.

Das Metalloxid liegt vor der Zugabe zu der wässrigen Lösung oder Suspension 24 in Form von Nanopartikeln mit einer mittleren Größe von kleiner als oder gleich ca. 10 nm vor.

Die wässrige Lösung oder Suspension 24 weist einen pH-Wert von kleiner oder gleich ca. 1,5 auf.

Das Metalloxid ist ferner in der wässrigen Lösung oder Suspension 24 in einem Bereich insbesondere von ca. 0,1 % bis ca. 2 % enthalten.

Die wässrige Lösung oder Suspension 24 kann zudem eine Komplexverbindung enthalten.

In Fig. 9a ist im Übrigen gezeigt, dass während dem Beschichten des Substrats 12 die Mikrotröpfchen mit dem darin gelösten TiO₂ elektrisch positiv geladen sind..

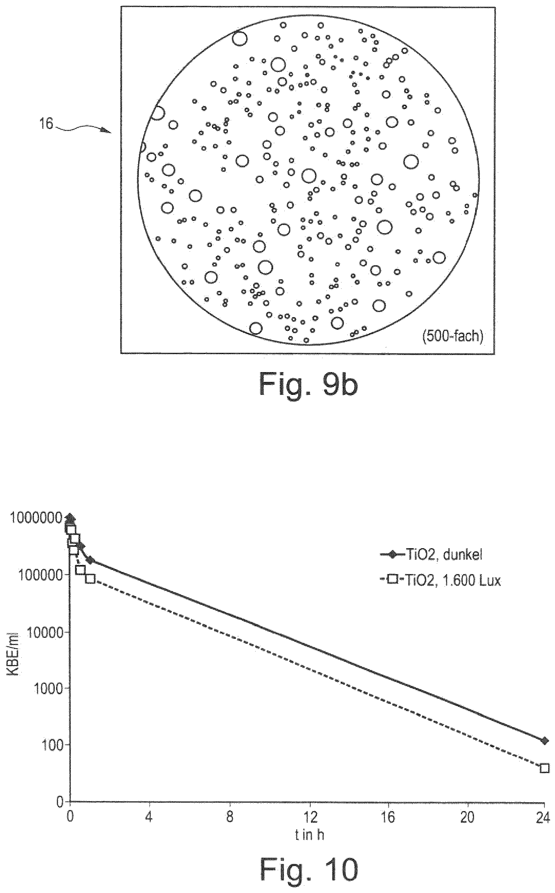

Fig. 9b zeigt diesbezüglich eine vergrößerte Darstellung einer Insel 16.

Insbesondere ist darin eine 500-fache Vergrößerung von TiO₂ (Massenkonzentration: 15 g/L) nach dem Trocknen unter dem Lichtmikroskop gezeigt.

Dabei kann es vorgesehen sein, dass mehrere Tröpfchen 26 zu einem großen Gebilde vereinen.

Die Wirkungsweise des jeweiligen Ausführungsbeispiels der erfindungsgemäßen Beschichtung 10, 10', 10", 10‴, 10ʺʺ lässt sich nun anhand von mehreren Experimentalergebnissen wie folgt beschreiben:
In allen verwendeten Experimenten wird wasserlösliches nano-Titandioxid (mittlere Partikelgröße von kleiner als oder gleich ca. 10 nm) in einer wässrigen Lösung 24 mit einem Nitratgehalt von ca. 28% (pH = ca. 1,5) verwendet.

Der Feuchtigkeitsanteil beträgt 2%.

Letzten Endes bestimmt dieses Verhalten die Grundidee, ein wasserlösliches TiO₂ nach Auftragung in Form von kleinen Tröpfchen 26 mit dem zuvor beschriebenen elektrostatischen Sprayverfahren in eine feste Matrix zu überführen, in die sich lösliche als auch unlösliche (Komplex-)Verbindungen mit keimreduzierender Wirkung einführen lassen.

Die abgeschiedenen Mikrotröpfchen 26 verdunsten bei Raumtemperatur sehr schnell innerhalb von nur 1 - 2 min und hinterlassen eine transparente TiO₂-Matrix in Form kleiner Inseln 16 (vgl. dazu Fig. 1 und 2).

Ein weiterer wesentlicher Aspekt, der zur Idee geführt hat mit wasserlöslichem Titandioxid als Grundmatrix zu arbeiten, ist die in der Literatur beschriebene Eigenschaft dieses Oxides, dass es nach Abscheidung aus dem wässrig-sauren Milieu (pH < ca. 6,8) diese positive Ladung auch im trockenen Zustand beibehält.

Hierbei treten sowohl Spezies der Form Ti-O(H⁺)-Ti als auch O-Ti⁺-O auf.

Verbindungen mit einer permanenten positiven Ladung (z.B. quartäre Ammoniumverbindungen wie PHMB) sind dafür bekannt, dass sie die in ihrer Außenhülle negativ polaren Bakterien anziehen und damit einen Rücktransport in die Raumluft verhindern.

Zudem führt die positive Ladung zu einer strukturellen Veränderung der Bakterienmembran und einer Dysfunktion der Ionenkanäle.

Damit wird die Zellhomöostase aus dem Gleichgewicht gebracht und der Mikroorganismus stirbt ab.

In Folge der hydrophilen Eigenschaften der TiO₂-Matrix (siehe Fig. 3) haben derartige hydrophile Oberflächen des Substrats 12 im Gegensatz zu hydrophoben Oberflächen den Vorteil, dass sie Bakterien auf der Oberfläche binden und einen Rücktransfer von der Beschichtungsoberfläche weg verhindern.

Zudem erleichtern sie die Reinigung, da sich zwischen dem Schmutz (u.a. Zelldebris) und der Oberfläche eine monomolekulare Wasserschicht ausbildet.

Diese Eigenschaft ist ein wichtiger erster Schritt in Richtung einer verbesserten Raumhygiene.

In diesem Zusammenhang zeigt Fig. 10 ein Diagramm mit einer Gegenüberstellung der zeitlichen Keimreduktion von E. coli für ein Ausführungsbeispiel der erfindungsgemäßen Beschichtung gemäß Fig. 5 in Form von TiO₂.

Zur Ermittlung der in Fig. 10 dargestellten Experimentalergebnisse zur Keimreduktion der TiO₂- Matrix wurde eine Suspension von ca. 15 g/L gelöstem TiO₂ (pH = ca. 1,5) 2x auf Petrischalen aufgesprayt und sowohl im Dunkeln als auch unter definierten LED Lichtbedingungen (1600 Lux = weißes Bürolicht) 0 bis 24 h mit *E. coli*-Bakterien inkubiert (JIS-Test Z 2801 bzw. Norm ISO 22196).

Das Ergebnis belegt eine zweiphasige Abnahme mit einem schnellen Vitalitätsverlust innerhalb der ersten Stunde und einer weiteren langsamen im Wesentlichen linearen Reduktion zwischen 1h bis 24h.

Die beiden Kurven zeigen ferner unter Dunkel- und Lichtbedingungen den gleichen Verlauf und führen nach 24h zu einer starken Wirksamkeit (R_{L} > 3,5).

Daher liegt der Schluss nahe, dass unter beiden Bedingungen die anti-mikrobiellen Eigenschaften der Beschichtung 10' von UV-Lichteinfall unabhängig vorhanden sind.

Bei Prozessen mit zugrundeliegenden Elektronenübertragungen (Redox-Reaktion) oder Elektronenanregungen (Photokatalyse) würde ein schnelles Absterben der Mikroorganismen zu erwarten sein.

Gerade bei letztgenanntem Prozess wäre ein Kurvenverlauf zu erwarten, der sich von dem der Dunkelreaktion deutlich unterscheidet.

Diesbezüglich geben Experimente mit z.B. darin verwendeter Kaliumiodid-Stärke bei 1600 Lux auf den mit TiO₂ beschichteten Oberflächen keinerlei Hinweise auf die Bildung eines blauen Jod-Stärke-Komplexes gemäß der Reaktion: 2 J⁻ + 2 h⁺ ---> J₂ (h⁺: Elektronenloch); J₂ + Stärke ---> J₂ Stärke (blau).

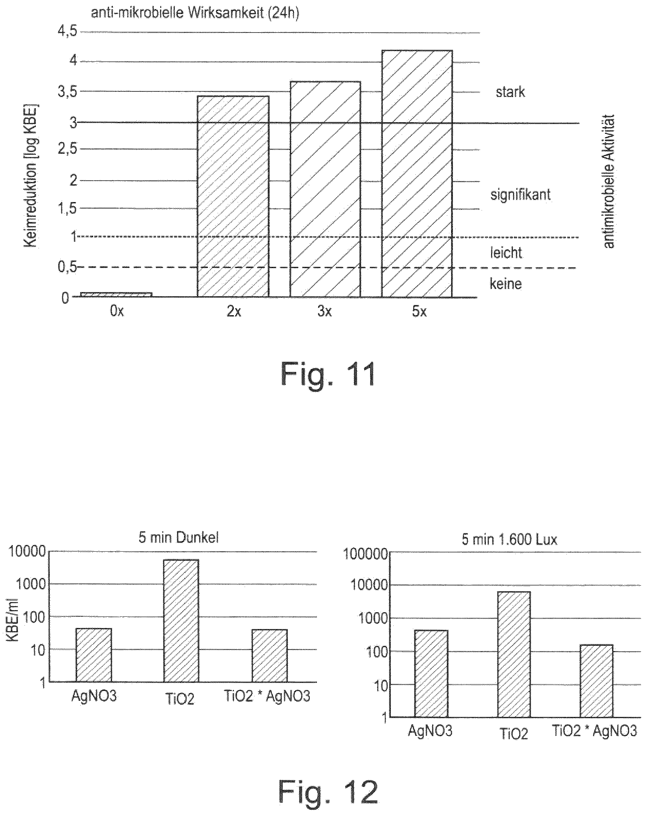

Weiterhin ist in Fig. 11 ein Balkendiagramm der anti-mikrobiellen Wirksamkeit eines Ausführungsbeispiels der erfindungsgemäßen Beschichtung 10' gemäß Fig. 5 bei 2x-, 3x- und 5x-facher Beschichtung einer Petrischale gezeigt.

Die anti-mikrobielle Beschichtung enthält eine Matrix aus TiO₂ und Silbernitrat TiO₂*AgNO₃.

Die anti-mikrobielle Wirksamkeit der Beschichtung gegenüber E. coli-Bakterien ist in Fig. 11 nach einer Inkubationsdauer von 24 h unter definierten Lichtbedingungen bei 1600 Lux angegeben.

Im ersten Schritt verändert Silber die Tertiärstruktur der bakteriellen Außenmembran.

Damit erhöht sich deren Permeabilität, woraufhin schwefelhaltige Enzyme der Atmungskette sowie für die DNA-Replikation verantwortliche Proteine in der Folge inaktiviert werden und der Mikroorganismus folglich abstirbt.

Da es hier zu einem kompletten Erliegen der für das Überleben wichtigen Zellhomöostase kommt, steht Silber nicht im Verdacht der Resistenzbildung.

Für die hier beschriebene TiO₂*AgNO₃-Matrix wurden 500 mg AgNO₃ in einer TiO₂-Suspension (ca. 15 g/L) gelöst und mittels Elektrosprays auf quadratische Aluminium-Plättchen (1x1 cm²) aufgebracht (Versuchsanordnung nicht in den anhängigen Figuren gezeigt).

Da es wichtig ist durch Einbringen von Silberionen eine langanhaltende antimikrobielle Wirkung zu erzielen, ruhten in einer ersten Studie mehrfach (2x, 5x, 10x) mit TiO₂*AgNO₃ beschichtete Petrischalen über 2 Tage und wurden nach Abdekantieren des Wassers mit Salzsäure versetzt.

In keinem der Fälle konnte hierbei Silberchlorid (AgCl) nachgewiesen werden.

Des Weiteren zeigt sich die Struktur der abgeschiedenen TiO₂*AgNO₃-Matrix stabil gegen 1000-faches Wischen mit einem anti-septischem Stofftuch (Ethanol, Benzalkoniumchlorid).

Somit kann z.B. bei einer täglich einmal erfolgenden Reinigung der Oberfläche der anti-mikrobiellen Beschichtung eine Lebensdauer von ca. drei Jahren erzielt werden.

Bereits erste Experimente zeigten nach 24-stündiger Inkubation im JIS-Test eine starke antibakterielle Wirksamkeit (R_{L} > 3) der TiO₂*AgNO₃-Matrix gegenüber *E*. *coli-*Bakterien (vgl. Fig. 11).

In der weiteren Folge wurde die starke anti-mikrobielle bzw. anti-bakterielle Wirksamkeit im Zeitraum zwischen 30 min bis 24 h bestätigt.

Zusätzlich sind in Fig. 12 zwei Balkendiagramme mit einer Gegenüberstellung der zeitlichen Keimreduktion einer TiO₂*AgNO₃ enthaltenden Beschichtung sowie ihrer Einzelkomponenten gemäß Fig. 5 bei Dunkelheit und Helligkeit gezeigt.

Eine Detailuntersuchung von TiO₂*AgNO₃ und seinen Einzelkomponenten zeigt nach 5 min Inkubation, dass die starke Wirksamkeit des TiO₂*AgNO₃ im Dunkeln (R_{L} = 3,3 ± 1,0) von der anti-mikrobiellen Wirksamkeit der Silberkationen dominiert (R_{L} = 4,3) wird.

TiO₂ selbst zeigt zu diesem Zeitpunkt eine signifikante Wirksamkeit (R_{L} = 2,1).

Auch wenn die Auswertung nach koloniebildenden Einheiten pro ml (KBE / ml) den Eindruck vermittelt, dass TiO₂ unter Licht eine stärkere Wirksamkeit entwickelt als im Dunkeln, so lässt das Ergebnis des RL-Wertes bei 1600 Lux (R_{L} = 2,1 ± 0,9) keine klare Tendenz erkennen.

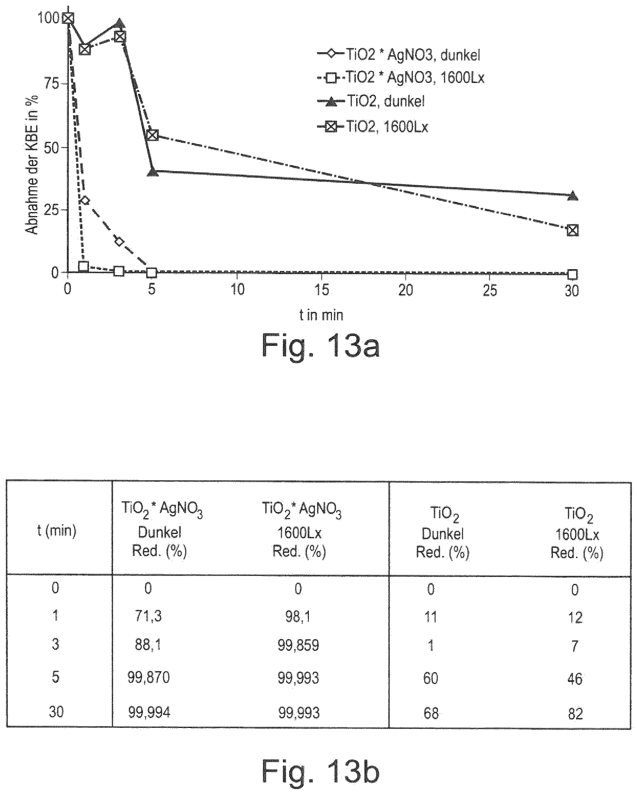

Zum besseren Verständnis des Wirkmechanismus wurden daher je zwei Kinetiken der anti-mikrobiellen Beschichtung mit TiO₂ alleine und mit der Kombination TiO₂*AgNO₃ bei unterschiedlichen Lichtbedingungen gemäß Fig. 13a durchgeführt.

Fig. 13a zeigt demnach ein Diagramm einer Gegenüberstellung der zeitlichen Keimreduktion dieser beiden Ausführungsbeispiele der erfindungsgemäßen Beschichtung 10' gemäß Fig. 5 bei Dunkelheit und Helligkeit (ca. 1600 Lux).

Die Auswertung wird zur besseren Übersicht in Prozentangaben dargestellt.

100% entsprechen gemäß Fig. 13a der jeweiligen Startkonzentration (ca. 5×10⁵ KBE).

Die Kombination aus TiO₂*AgNO₃ zeigt eine sehr starke Keimreduktion innerhalb der ersten 5 Minuten um bis zu > 99,99%.

Bemerkenswert ist die sehr starke Keimreduktion bei 1600 Lux von 98,1% nach 1 min und 99,859% nach 3 min.

Die jeweils niedrigeren Reduktionszahlen dieser TiO₂*AgNO₃-Kompositionsmatrix bei 1 min (71,3%) und nach 3 min (88,1%) im Dunkeln liefern einen ersten Beweis für das Mitwirken eines lichtabhängigen Wirkmechanismus.

Die anti-mikrobiellen Eigenschaften dieser Beschichtung 10' sind folglich durch UV-Lichteinfall verstärkbar.

Bei TiO₂ ist das Bild wiederum nicht derart eindeutig.

Hier ist zunächst nach 30 min ein klarer Unterschied einer Keimreduktion bei 1600 Lux von 82% (vgl. Dunkel: 68%) zu erkennen.

Der Grund für diese Schwankungen liegt im JIS-Test begründet, der letzten Endes keine absoluten Zahlen sondern eine Klassifizierung in "nicht, leicht, signifikant und stark wirksam" zulässt.

Bei Verbindungen mit Wirksamkeiten im Bereich 1,0 ≤ R_{L} 3,0 sind die beobachteten Schwankungen am stärksten, während das stark wirksame AgNO₃ reproduzierbare RL-Werte im Bereich von 4,0 - 4,3 liefert.

Zur weiteren Veranschaulichung zeigt Fig. 13b zusätzlich die in Fig. 13a dargestellten Datenpunkte in tabellarischer Darstellung.

Die vorhandene keimreduzierende Eigenschaft des TiO₂*AgNO₃ kann demnach wie folgt erklärt werden.

Erstens werden durch die nachgewiesene Hydrophilie und die positive Ladung des Metalloxids TiO₂ Keime zunächst angezogen und festgehalten.

Kationen können im zweiten Schritt von der TiO₂-Matrix aus die Tertiärstruktur der bakteriellen Außenmembran so verändern, dass diese Membran löchrig wird und das Bakterium abstirbt.

Zweitens weist Kationisches Silber ein sehr hohes Oxidationspotential auf und ist in der Lage durch schnelle Elektronentransfers die Außenmembran der Mikroorganismen anzugreifen, wodurch zusätzlich schwefelhaltige Enzyme chemisch inaktiviert werden.

Dies sind zeitlich betrachtet sehr schnelle Prozesse, die zu einem schnellen Absterben der Bakterien führen.

In weiteren in-vitro Experimenten konnte eine starke Wirksamkeit von TiO₂*AgNO₃ gegen den Gram-positiven Keim Staphylococcus aureus nachgewiesen werden.

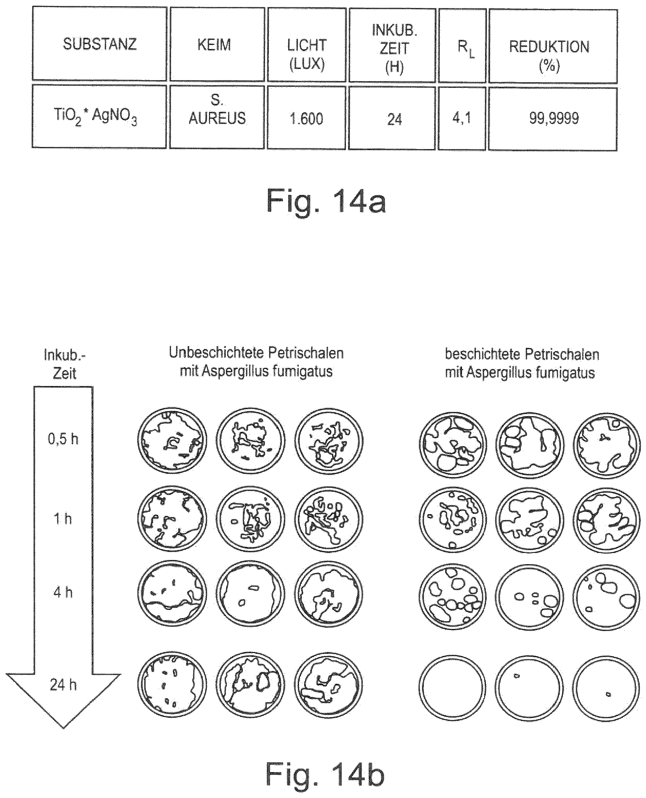

Fig. 14a zeigt diesbezüglich eine tabellarische Darstellung der anti-mikrobiellen Wirksamkeit eines Ausführungsbeispiels der Beschichtung 10' gemäß Fig. 5 gegenüber eines Staphylococcus aureus Keims.

Die anti-mikrobielle Wirksamkeit dieser Beschichtung 10' gegenüber dem Keim Staphylococcus aureus ist in Fig. 14a nach einer Inkubationsdauer von 24h unter definierten Lichtbedingungen von ca. 1600 Lux mit RL = 4,1 angegeben.

Zur weiteren Evaluierung der potentiellen Wirksamkeit von TiO₂*AgNO₃ gegen das Ansiedeln von Schimmel und Hefepilzen wurde diese Kombination mit der antimikrobiellen Beschichtung unter realen Bedingungen gegen diese pathogenen Keime getestet.

Hierbei werden beschichtete und nicht beschichtete Petrischalen trocken kontaminiert und mittels Abklatschverfahren (RODAC-Methode) das Keimwachstum überprüft.

Fig. 14b zeigt diesbezüglich eine zeitliche Reduktion eines Aspergillus fumigatus Keims auf einer unbeschichteten und einer mit einem Ausführungsbeispiel der Beschichtung 10' gemäß Fig. 5 beschichteten Petrischale.

Die anti-mikrobielle Beschichtung in Fig. 14b weist, wie auch in den Fig. 11 bis 14a dargestellt, eine TiO₂*AgNO₃ Matrixstruktur auf.

In einer 24h-Studie zeigen TiO₂*AgNO₃ beschichtete Petrischalen (rechte Abbildung in Fig. 14b) eine signifikante Wachstumskontrolle innerhalb der ersten 4h und eine eindeutige Keimreduktion nach 24h verglichen zu der unbeschichteten Referenz-Petrischale (linke Abbildung in Fig. 14b).

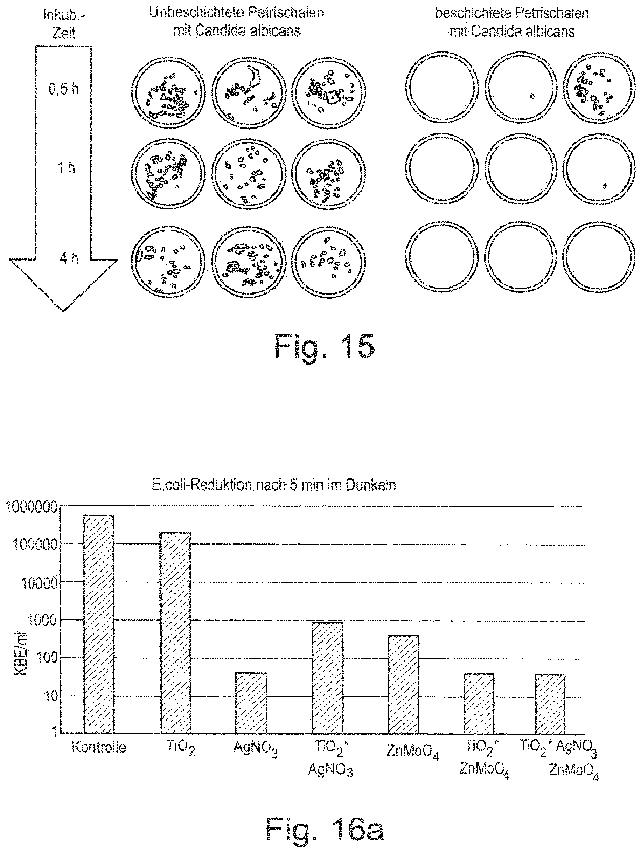

In Fig. 15 ist eine zeitliche Reduktion eines Candida albicans-Keims auf einer unbeschichteten und einer mit einem Ausführungsbeispiel der Beschichtung 10' gemäß Fig. 5 beschichteten Petrischale.

Die anti-mikrobielle Beschichtung 10' in Fig. 15 weist ebenso, wie auch in den Fig. 11 bis 14b dargestellt, eine TiO₂*AgNO₃ Matrixstruktur auf.

Ebenfalls in einer 24h-Studie wird bei den mit TiO₂*AgNO₃ beschichteten Petrischalen (rechte Abbildung in Fig. 15) Bereits nach 4-stündiger Inkubation eine starke Reduktion von Candida albicans-Keims um bis zu 4 logarithmische Stufen (R_{L} = 3,7) verglichen zu der unbeschichteten Referenz-Petrischale (linke Abbildung in Fig. 14b) beobachtet.

Die anti-mikrobielle Beschichtung 10' von Substraten gemäß den Fig. 11 bis 15 mit TiO₂*AgNO₃ ist z.B. im Außenbereich (z.B. Gebäudewände, Oberflächen von öffentlichen Verkehrsfahrzeugen oder Straßenbeläge) denkbar.

Daher wurde das toxikologische Verhalten dieser Beschichtung gegenüber Daphniaen (Wasserfloh) als auch Artemis-Naupien (Salzkrebse) untersucht.

Hierzu wurden Petrischalen 0-, 2-, 5- und 10-mal mit TiO₂*AgNO₃ beschichtet und darin über drei Tage diese Wasserlebewesen kultiviert. Im Ergebnis zeigen diese Tierchen in den beschichteten Platten die gleiche Vitalität wie in den unbeschichteten.

Nach Beendigung der Experimente wurde die biologische Matrix abfiltriert und zu der klaren wässrigen Lösung Salzsäure zugetropft.

Hierbei konnte jedoch keinerlei Bildung von Silberchlorid gemäß der Reaktion Ag⁺ + Cl⁻ -> AgCl beobachtet werden.

Das bedeutet, dass die Silberionen in der TiO₂-Matrix erhalten bleiben.

Fig. 16a zeigt weiter ein Balkendiagramm mit einer Gegenüberstellung der zeitlichen E. coli Keimreduktion von sechs Ausführungsbeispielen erfindungsgemäßer und einer nicht erfindungsgemäßen Beschichtung 10', 10" gemäß Fig. 5 und Fig. 6 nach 5 min Inkubationszeit bei Dunkelheit. "ZnMoO₄" bezieht sich auf ein Vergleichsbeispiel. Diesbezüglich enthält die anti-mikrobielle Beschichtung eine Kombination der TiO₂-Matrix mit Oxiden und Salzen der Gruppe 6 (IUPAC Nomenklatur) des Periodensystems der Elemente.

Da Chromverbindungen sich durch eine sehr ausgeprägte Toxizität auszeichnen, galt der Fokus den Oxiden und Salzen der Elemente Molybdän (Mo) und Wolfram (W).

Als möglicher Wirkmechanismus werden deren Redox-Potential und saure Eigenschaften genannt.

Auf der Suche nach Alternativen zu dem löslichen Silbernitrat (AgNO₃) wurden daher erste Experimente mit dem schwer löslichen Zinkmolybdat (ZnMoO₄) durchgeführt, welche in Fig. 16a dargestellt sind.

Das Zinkmolybdat (ZnMoO₄) wurde alleine (ca. 5,0 g/L) und in Kombination mit der oben beschriebenen TiO₂-Matrix (ca. 15 g/L) via Elektrospray auf ein Substrat 12 aufgetragen und gegen *E*. *coli* getestet.

ZnMoO₄ (R_{L} = 3,2 ) zeigt im Vergleich zu AgNO₃ (R_{L} = 4,3) eine schwächere, jedoch zu TiO₂ (R_{L} = 2,1) eine stärkere keimreduzierende Wirkung.

Interessanterweise ist die Kombination TiO₂*ZnMoO₄ signifikant stärker wirksam (R_{L} = 4,1) als die beiden Einzelkomponenten TiO₂ und ZnMoO₄.

Diese starke Wirksamkeit kann selbst durch Zugabe von AgNO₃ zur TiO₂*ZnMoO₄-Matrix nicht mehr verstärkt werden.

Zusätzliche Untersuchungen in Kombination mit einem weiteren Keim Staphylococcus aureus bestätigen die keimreduzierende Wirksamkeit von ZnMoO₄ und TiO₂*ZnMoO₄ im JIS-Test bei 1600 Lux Lichteinfall.

Aufgrund des anti-mikrobiellen Potentials der Substanzklasse der Molybdate sowie von Molybdänoxid wurden die folgenden Verbindungen wie bereits zuvor beschrieben jeweils in Form einer anti-mikrobiellen Beschichtung auf ein Substrat 12 gesprayt und innerhalb von 24h Inkubationszeit und einem Lichteinfall von 1600 Lux gegenüber E.coli-Bakterien getestet.

Die entsprechenden Molybdate und das Molybdänoxid sowie deren anti-mikrobielle Wirksamkeit nach 1h und 24h können aus Fig. 6 entnommen werden.

Zudem wurde Ammoniumheptamolybdat (NH₄)₆Mo₇O₂₄ getestet, welches unter diesen Experimentalbedingungen eine anti-mikrobielle Wirksamkeit von 1,4 nach 1h bzw. 4,3 nach 24h aufweist.

Das für die Synthese verwendete Ammoniumheptamolybdat ((NH₄)₆Mo₇O₂₄) weist bereits nach 1h eine signifikante Wirksamkeit auf.

Jedoch lässt das ebenfalls sehr gut lösliche Natriummolybdat (Na₂MoO₄) selbst nach 24 h keine anti-mikrobielle Wirkung erkennen (vgl. Fig. 6).

Neben dem oben beschriebenen Zinkmolybdat (ZnMoO₄) konnte Silbermolybdat (Ag₂MoO₄) als weitere stark keimreduzierende Verbindung nachgewiesen werden.

In Analogie zu den Molybdaten und dem Molybdänoxid wurden die korrespondierenden Wolframate und Wolframoxid synthetisiert und bei 1600 Lux im JIS-Test gegen *E*. *coli* getestet.

Als Ausgangsmaterial für die Synthesen diente Natriumwolframat, das mit den löslichen Salzen (Chlorid, Nitrat, Sulfat) von Aluminium, Cer, Kobalt, Kupfer, Nickel, Mangan, Silber und Zink zu schwerlöslichen Salzen der Form XₙWO₄ reagiert.

Die entsprechenden Wolframate und das Wolframoxid sowie deren anti-mikrobielle Wirksamkeit nach 1h und 24h können aus Fig. 6 und 7 entnommen werden.

In Analogie zum Natriummolybdat zeigt auch das Wolframmolybdat nach einer Inkubationszeit von 1h und 24h keinerlei antimikrobielle Wirksamkeit.

Mit Ausnahme von Manganwolframat besitzen alle anderen Wolframate und selbst das Wolframoxid eine signifikante bis starke Wirksamkeit gegen *E*. *coli.*

In Analogie zum Zinkmolybdat zeigt Zinkwolframat (ZnWO₄) alleine und in der Kombination TiO₂*ZnWO₄ eine starke keimreduzierende Wirkung innerhalb 24 h. Diese werden auch für Silberwolframat (AgWO₄), Aluminiumwolframat (AlWO₄), Ceriumwolframat (CeWO₄), Kupferwolframat (CuWO₄) und für deren jeweilige Kombination mit der TiO₂-Matrix beobachtet.

Des Weiteren besitzt auch Wolframoxid diese starke Wirkung sowie dessen Kombination mit der TiO₂-Matrix.

Beim Zusammenstellen der gemischten Suspensionen aus Metallwolframat und TiO₂ fällt auf, dass die zum Teil sehr bunten Wolframate mit TiO₂ einen farblosen Komplex bilden.

Als Beispiele seien hier die Kombination von TiO₂ mit CeWO₄ (gelb) und CuWO₄ (grün) aufgeführt.

Diese Beobachtungen führen zu der Annahme, das die partiell positiv geladenen TiO₂-Kristalle mit dem negativ geladenen Wolframat-Anion einen Komplex der Form O-(Ti)⁺.....⁻W(O4) oder O-(Ti)⁺.....⁻O-W(O3) eingehen.

Möglicherweise bildet sich auch ein Dreizentrenkomplex zwischen dem positiv geladenen TiO₂, dem positivem Metallkation (z.B. Ce²⁺) und dem Wolframat-Anion.

Jedenfalls verändern sich die elektronischen Zustände in der Art, dass die Farbigkeit der ursprünglichen Wolframate verloren geht.

Auch das gelbe Wolframoxid (WO₃) führt mit TiO₂ durch Komplexierung zu einer farblosen Suspension.

Zusammenfassend kann festgehalten werden, dass aufgrund der anti-mikrobiellen Wirksamkeit von Komplexen der Art TiO₂*XₙMeO₄ (Me = Cr, Mo oder W; X = Mn, Fe, Co, Ni, Cu, Zn, Ru, Rh,Pd, Ag, Cd, Re, Os, Ir, Pt, Au, Hg, sowie Ce und die Lanthaniden; n = 0 - 24) können diese mittels Elektrospray auf alle Arten von Oberflächen aufgetragen werden und eine anti-mikrobielle Wirksamkeit entfalten.

Eine derartige Verwendung eines Beschichtungsmaterials kann somit zur Erzeugung einer wie vorstehend beschriebenen anti-mikrobiellen Beschichtung 10, 10', 10", 10‴, 10ʺʺ auf einer Oberfläche 14 eines Substrats 12 vorgesehen werden, wobei die Beschichtung 10 wenigstens ein wie vorstehend beschriebenes Metalloxid und/oder ein Metallsalz enthält.

Die Beschichtung 10, 10', 10", 10‴, 10ʺʺ wird dabei durch ein elektrostatisches Sprayverfahren wie vorstehend beschrieben erhalten.

Die Oberfläche 14 der Beschichtung 10, 10', 10", 10‴, 10ʺʺ kann dabei eine Arbeitsfläche sein oder mit der Umgebungsluft, Fluiden oder Flüssigkeiten wenigstens temporär in Kontakt stehen.

Weiterhin kann TiO₂*XₙMeO₄ in Form der Suspension oder als Feststoff nach Trocknen zu Lacken und Farben (z.B. anti-fouling) zugegeben werden, die damit antimikrobielle Eigenschaften erhalten.

In diesem Fall wird dem Beschichtungsmaterial, das insbesondere als ein Anti-Fouling-Lack oder eine Anti-Fouling-Farbe ausgebildet ist, ein TiO₂*XₙMeO₄-Komplex in Form einer Suspension oder als Feststoff nach dem Trocknen zugegeben.

Die farblosen Komplexe der Form TiO₂*XₙMeO₄ lassen sich in Kunststoffe (z.B. Silicon, PU, etc.) oder Baustoffe (z.B. Zement) einarbeiten, die damit anti-mikrobiell werden.

Sowohl die Molybdate XₙMoO₄ als auch die Wolframate XₙWO₄ zeichnen sich durch eine sehr schlechte Löslichkeit aus.

Diese Verbindungen zeigen in den Suspensionen mit TiO₂ eine stark präzipitierende Wirkung, die eine Lagerung im wässrigen Medium erschwert und möglicherweise dazu führt, dass nicht immer die richtige Konzentration mit dem Elektrospray übertragen wird.

Sowohl bei der Synthese von Molybdänoxid aus Ammoniumheptamolybdat als auch bei der Darstellung von Wolframoxid aus Natriumwolframat unter sauren Bedingungen ist aufgefallen, dass die entstehenden Oxide aufgrund ihres gelartigen Charakters schwer zu filtrieren sind.

Diese Beobachtung half jedoch eine geeignete Suspension für obengenannte schwerlösliche Verbindungen zu generieren.

Wenn die saure TiO₂ nano-Suspension (pH = 1,5) zunächst mit 50 - 150 mg Ammoniumheptamolybdat versetzt wird, entstehen sichtbare Schlieren von TiO₂ ... MoOs oder MoO₃*(H₂O)ₙ.

Gibt man nun ZnMoO₄ zu, so bleibt dieses über einen längeren Zeitraum stabil in der Schwebe ohne auszufallen.

Damit eröffnen sich neue Ansätze zur Darstellung mit Mischkomponenten, die neben der Muttermatrix TiO₂ zusätzlich MoOs, WO₃ und/oder die obigen Salze enthalten.

Mit Hilfe dieser Erkenntnisse zur Verbesserung der Gesamtformulierung eröffnen sich neue Kombinationen von TiO₂ mit weiteren schwerlöslichen Metalloxiden (AgO, CuO, SiO₂, ZnO) oder Matrixvernetzern (Na₂SiO₄, Na₂[B₄O₅(OH)₄]).

Diese könnten sowohl eine positive Auswirkung auf die anti-mikrobielle Wirksamkeit haben, als auch auf die Altersbeständigkeit und Robustheit der abgeschiedenen TiO₂-Matrix.

Als Alternative zu TiO₂ konnte z.B. bewiesen werden, dass sich das ebenfalls wasserlösliche nano-Zirkoniumoxid ZrO₂ zu einer dem TiO₂ (gleiche Gruppe im PSE) vergleichbaren transparenten Matrix mittels des elektrostatischen Sprayverfahrens auftragen lässt.

In einem beispielhaften Experiment zur Übertragbarkeit des TiO₂-Matrixprinzips auf ZrO₂ wurden 15 g/L nano-ZrO₂ mit 0,5 g AgNO₃ gelöst und nach dem Aufsprayen im JIS-Test (1600 Lux) 1 h gegen *E*. *coli* getestet.

Die Wirksamkeit dieser Kombination liegt hier bei R_{L} = 4,3 (stark).

Damit wurde der Beweis erbracht, dass ZrO₂ als Ersatz von TiO₂ oder in Kombination mit diesem erfolgreich eingesetzt werden kann.

Ähnlich sollte Hafnium-Oxid als Gruppenverwandter der IV. Nebengruppe (Ti, Zr, Hf) verwendbar sein.

### Bezugszeichenliste

- 10: Anti-mikrobielle Beschichtung
- 12: Substrat
- 14: Oberfläche des Substrats
- 16: Insel
- 18: Zentralbereich
- 20: nach außen erhebender Randbereich
- 22: Furchen
- 24: wässrige Lösung oder Suspension
- 26: Tröpfchen

- 10': Anti-mikrobielle Beschichtung
- 10": Anti-mikrobielle Beschichtung
- 10‴: Anti-mikrobielle Beschichtung
- 10ʺʺ: Anti-mikrobielle Beschichtung

## Patentansprüche

1. Anti-mikrobielle Beschichtung (10, 10', 10", 10‴, 10ʺʺ) eines Substrats (12),
wobei die Beschichtung (10, 10', 10", 10‴, 10ʺʺ) erhalten wird durch Anbringen einer wässrigen Lösung oder Suspension (24) in Tröpfchenform auf einer Oberfläche (14) des Substrats mittels eines elektrostatischen Sprayverfahrens,
wobei die wässrige Lösung oder Suspension (24) wenigstens ein darin lösliches Metalloxid und/oder wenigstens ein Metallsalz enthält,
wobei die Beschichtung wenigstens ein Metalloxid und/oder wenigstens ein Metallsalz enthält, wobei
die Beschichtung (10, 10', 10", 10‴, 10ʺʺ) in Form einer Matrixstruktur ausgebildet ist, wobei die Matrixstruktur mehrere zueinander beabstandete Inseln (16) aufweist, und wobei die Inseln (16) einen Durchmesser in einem Bereich insbesondere von ca. 0,1 µm bis ca. 500 µm, vorzugsweise von ca. 1 µm bis ca. 200 µm, besonders bevorzugt von ca. 2 µm bis ca. 100 µm aufweisen, und wobei die Inseln (16) jeweils entsprechend ihres Durchmessers zueinander beabstandet sind,
wobei
der Aufbau des Metalloxids durch die Formel A_{c}O_{d} oder MeₑO_{d} beschrieben ist, wobei A aus den Elementen der Gruppe 4 und Me aus den Elementen der Gruppe 6 des Periodensystems der Elemente (IUPAC Nomenklatur) ausgewählt sind und O das Element Sauerstoff ist, wobei c, d und e unabhängig voneinander einen Wert zwischen 0 und 24, also nicht 0 und 24 einnehmen können, vorzugsweise das Metalloxid TiO₂, ZrO₂, HfO₂, Molybdänoxid oder Wolframoxid ist,
und wobei
der Aufbau des Metallsalzes durch die Formel XBO₃ beschrieben ist, wobei X aus den Elementen der Gruppen 5, 7, 8, 9, 10, 11, 12, der Lanthanoide oder der Actinoide sowie B aus den Elementen der Gruppe 15 des Periodensystems der Elemente (IUPAC Nomenklatur) ausgewählt ist und O das Element Sauerstoff ist.

2. Anti-mikrobielle Beschichtung (10", 10‴) nach Anspruch 1, **dadurch gekennzeichnet, dass** die Beschichtung (10", 10‴) das Metalloxid TiO₂ und/oder das Metallsalz AgNO₃ enthält und wobei die Beschichtung (10", 10‴) ferner wenigstens eine Komplexverbindung enthält,
wobei
die Komplexverbindung entweder aus einer Verbindung von Molybdaten mit TiO₂ oder aus einer Verbindung von Wolframaten mit TiO₂ ausgebildet ist,
wobei die Molybdate (NH₄)₆Mo₇O₂₄, Na₂MoO₄, Ag₂MoO₄, Al₂(MoO₄)₃, CeMoO₄, CoMoO₄, CuMoO₄, Fe-III-MoO₄, MnMoO₄, NiMoO₄ oder ZnMoO₄ umfassen, und
wobei die Wolframate Na₂WO₄, AgWO₄, AlWO₄, CeWO₄, CoWO₄, CuWO₄, Fe-III-WO₄, MnWO₄, NiWO₄ oder ZnWO₄ umfassen.

3. Anti-mikrobielle Beschichtung (10, 10') nach Anspruch 1, **dadurch gekennzeichnet, dass** das Metalloxid und Metallsalz TiO₂AgNO₃ ist.

4. Anti-mikrobielle Beschichtung (10"") nach Anspruch 1, **dadurch gekennzeichnet, dass** die Inseln (16) TiO₂ und ZnMoO₄ enthalten.

5. Anti-mikrobielle Beschichtung (10, 10', 10", 10‴, 10"") nach einem der vorhergehenden Ansprüche, **dadurch gekennzeichnet, dass** die Inseln (16) eine Oberfläche aufweisen, die pfannenartig mit einem Zentralbereich (18) und einem sich diesbezüglich radial nach außen erhebenden Randbereich (20) ausgebildet ist.

6. Elektrostatisches Sprayverfahren zum Beschichten wenigstens eines Substrats (12), umfassend wenigstens die folgenden Schritte:
- Bereitstellen eines Substrats (12);
- Beschichten des Substrates (12) mit einer wässrigen Lösung oder Suspension (24) in Tröpfchenform durch das elektrostatische Sprayverfahren, wobei die wässrige Lösung oder Suspension (24) wenigstens ein darin lösliches Metalloxid mit einem Aufbau des Metalloxids gemäß Anspruch 1 und/oder wenigstens ein Metallsalz mit einem Aufbau des Metallsalzes gemäß Anspruch 1 enthält, wodurch die wässrige Lösung oder Suspension (24) anti-mikrobielle Eigenschaften aufweist; und
- Ausbilden einer festen, anti-mikrobiellen Beschichtung (10, 10', 10", 10‴, 10"") auf dem Substrat (12) in Form einer Matrixstruktur durch Verdunsten der wässrigen und/oder flüssigen Phase aus der wässrigen Lösung oder Suspension (24), so dass das Metalloxid und/oder das Metallsalz in der Matrixstruktur der Beschichtung (10, 10', 10", 10‴, 10ʺʺ) enthalten sind,
wobei die Beschichtung (10, 10', 10", 10‴, 10ʺʺ) in Form einer Matrixstruktur ausgebildet ist, wobei die Matrixstruktur mehrere zueinander beabstandete Inseln (16) aufweist, und wobei die Inseln (16) einen Durchmesser in einem Bereich insbesondere von ca. 0,1 µm bis ca. 500 µm, vorzugsweise von ca. 1 µm bis ca. 200 µm, besonders bevorzugt von ca. 2 µm bis ca. 100 µm aufweisen, und wobei die Inseln (16) jeweils entsprechend ihres Durchmessers zueinander beabstandet sind.

7. Nicht-therapeutische Verwendung eines wenigstens ein Metalloxid mit einem Aufbau des Metalloxids gemäß Anspruch 1 und optional wenigstens ein Metallsalz mit einem Aufbau des Metallsalzes gemäß Anspruch 1 enthaltenden Beschichtungsmaterials zur Erzeugung einer anti-mikrobiellen Beschichtung (10, 10', 10", 10‴, 10ʺʺ) auf einer Oberfläche eines Substrats (12), wobei die Beschichtung (10, 10', 10", 10‴, 10"") wenigstens das Metalloxid und optional wenigstens das Metallsalz enthält,
wobei die Beschichtung (10, 10', 10", 10‴, 10ʺʺ) in Form einer Matrixstruktur ausgebildet ist, wobei die Matrixstruktur mehrere zueinander beabstandete Inseln (16) aufweist, und wobei die Inseln (16) einen Durchmesser in einem Bereich insbesondere von ca. 0,1 µm bis ca. 500 µm, vorzugsweise von ca. 1 µm bis ca. 200 µm, besonders bevorzugt von ca. 2 µm bis ca. 100 µm aufweisen, und wobei die Inseln (16) jeweils entsprechend ihres Durchmessers zueinander beabstandet sind.

## Claims

1. An anti-microbial coating (10, 10', 10", 10‴, 10ʺʺ) of a substrate (12),
wherein the coating (10, 10', 10", 10‴, 10ʺʺ) is obtained by applying an aqueous solution or suspension (24) in droplet form onto a surface (14) of the substrate by means of an electrostatic spraying method, the aqueous solution or suspension (24) containing at least one metal oxide soluble therein and/or at least one metal salt,
the coating containing at least one metal oxide and/or at least one metal salt, wherein
the coating (10, 10', 10", 10‴, 10ʺʺ) is developed in the form of a matrix structure, the matrix structure having a plurality of islands (16) spaced apart from one another, and the islands (16) having a diameter in a range in particular from about 0.1 µm to about 500 µm, preferably from about 1 µm to about 200 µm, particularly preferably from about 2 µm to about 100 µm, and the islands (16) each being spaced apart from one another in accordance with their diameter,
wherein
a metal oxide constitution is described by the formula A_{c}O_{d} or MeₑO_{d}, wherein A is selected from the elements of group 4 and Me is selected from the elements of group 6 of the periodic table of the elements (IUPAC nomenclature) and 0 is the element oxygen, wherein c, d and e independently of one another can take a value between 0 and 24, i.e. not 0 and 24, the metal oxide preferably being TiO₂, ZrO₂, HfO₂, molybdenum oxide or tungsten oxide,
and wherein
a metal salt constitution is described by the formula XBO₃, wherein X is selected from the elements of groups 5, 7, 8, 9, 10, 11, 12, the lanthanides or the actinides, and B is selected from the elements of group 15 of the periodic table of the elements (IUPAC nomenclature), and 0 is the element oxygen.

2. The anti-microbial coating (10, 10‴) according to claim 1, **characterized in that** the coating (10', 10‴) comprises the metal oxide TiO₂ and/or the metal salt AgNO₃ and wherein the coating (10", 10‴) further comprises at least one complex compound,
wherein
the complex compound is formed from either a compound of molybdates with TiO₂ or from a compound of tungstates with TiO₂,
wherein the molybdates comprise (NH₄)₆Mo₇O₂₄, Na₂MoO₄, Al₂MoO₄, Al₂(MoO₄)₃, CeMoO₄, CoMoO₄, CuMoO₄, Fe-III-MoO₄, MnMoO₄, NiMoO₄ or ZnMoO₄, and
wherein the tungstates comprise Na₂WO₄, AgWO₄, AlWO₄, CeWO₄, CoWO₄, CuWO₄, Fe-III-WO₄, MnWO₄, NiWO₄ or ZnWO₄.

3. The anti-microbial coating (10, 10') according to claim 1, **characterized in that** the metal oxide and metal salt is TiO₂AgNO₃.

4. The anti-microbial coating (10ʺʺ) according to claim 1, **characterized in that** the islands (16) comprise TiO₂ and ZnMoO₄.

5. The anti-microbial coating (10, 10', 10", 10‴, 10ʺʺ) according to any of the preceding claims, **characterized in that** the islands (16) have a surface which is formed in a pan-like manner having a central region (18) and a peripheral region (20) which rises radially outwards in relation thereto.

6. An electrostatic spraying method for coating at least one substrate (12), comprising at least the following steps:
- providing a substrate (12);
- coating the substrate (12) with an aqueous solution or suspension (24) in droplet form by the electrostatic spraying method, the aqueous solution or suspension (24) containing at least one metal oxide soluble therein having the metal oxide constitution according to claim 1 and/or at least one metal salt having the metal salt constitution according to claim 1, giving the aqueous solution or suspension (24) anti-microbial properties; and
- forming a solid anti-microbial coating (10, 10', 10", 10‴, 10ʺʺ) on the substrate (12) in the form of a matrix structure by evaporation of the aqueous and/or liquid phase from the aqueous solution or suspension (24), so that the metal oxide and/or the metal salt are contained in the matrix structure of the coating (10, 10', 10", 10‴, 10ʺʺ),
wherein the coating (10, 10', 10", 10‴, 10ʺʺ) is developed in the form of a matrix structure, the matrix structure having a plurality of islands (16) spaced apart from one another, and the islands (16) having a diameter in a range in particular from about 0.1 µm to about 500 µm, preferably from about 1 µm to about 200 µm, particularly preferably from about 2 µm to about 100 µm, and the islands (16) each being spaced apart from one another in accordance with their diameter.

7. A non-therapeutic use of a coating material containing at least one metal oxide having the metal oxide constitution according to claim 1 and optionally at least one metal salt having the metal salt constitution according to claim 1 for producing an anti-microbial coating (10, 10', 10", 10‴, 10ʺʺ) on a surface of a substrate (12), wherein the coating (10, 10', 10", 10‴, 10ʺʺ) contains at least the metal oxide and optionally at least the metal salt,
wherein the coating (10, 10', 10", 10‴, 10ʺʺ) is developed in the form of a matrix structure, the matrix structure having a plurality of islands (16) spaced apart from one another, and the islands (16) having a diameter in a range in particular from about 0.1 µm to about 500 µm, preferably from about 1 µm to about 200 µm, particularly preferably from about 2 µm to about 100 µm, and the islands (16) each being spaced apart from one another in accordance with their diameter.

## Revendications

1. Revêtement antimicrobien (10, 10', 10'', 10‴, 10ʺʺ) d'un substrat (12) ;
le revêtement (10, 10', 10'', 10‴, 10ʺʺ) étant obtenu par application d'une solution ou d'une suspension aqueuse (24) sous forme de gouttelettes sur une surface (14) du substrat à l'aide d'un procédé de pulvérisation électrostatique, la solution ou la suspension aqueuse (24) contenant au moins un oxyde métallique soluble en elle et/ou au moins un sel métallique ;
le revêtement contenant au moins un oxyde métallique et/ou au moins un sel métallique :
dans lequel le revêtement (10, 10', 10'', 10‴, 10ʺʺ) est réalisé sous la forme d'une structure matricielle, la structure matricielle comportant plusieurs îlots (16) espacés les uns par rapport aux autres et les îlots (16) présentant un diamètre dans une certaine zone notamment d'environ 0,1 µm à environ 500 µm, de préférence d'environ 1 µm à environ 200 µm, de façon particulièrement préférée d'environ 2 µm à environ 100 µm et les îlots (16) étant respectivement placés à une certaine distance les uns des autres en fonction de leur diamètre ;
dans lequel la composition de l'oxyde métallique est décrite par la formule A_{c}O_{d} ou MeₑO_{d}, où A est sélectionné parmi les éléments du groupe 4 et Me est sélectionné parmi les éléments du groupe 6 du système périodique des éléments (nomenclature IUPAC) et où O est l'élément oxygène, c, d et e pouvant prendre la forme de valeurs indépendantes les unes des autres comprises entre 0 et 24, donc hors 0 et 24, l'oxyde métallique étant de préférence TiO₂, ZrO₂, HfO₂, l'oxyde de molybdène ou l'oxyde de wolframite ; et
dans lequel la composition du sel métallique est décrite par la formule XBO₃, où X est sélectionné parmi les éléments des groupes 5, 7, 8, 9, 10, 11, 12, les lanthanoïdes ou les actinoïdes et B est sélectionné parmi les éléments du groupe 15 du système périodique des éléments (nomenclature IUPAC) et O est l'élément oxygène.

2. Revêtement antimicrobien (10'', 10‴) selon la revendication 1, **caractérisé en ce que** le revêtement (10", 10‴) contient l'oxyde métallique TiO₂ et/ou le sel métallique AgNO₃ et dans lequel le revêtement (10", 10‴) contient en outre au moins une liaison complexe ;
dans lequel la liaison complexe est réalisée soit à partir d'une liaison de molybdalates avec TiO₂ ou à partir d'une liaison de wolframates avec TiO₂ ;
dans lequel les molybdates comprennent (NH₄)₆Mo₇O₂₄, Na₂MoO₄, Ag₂MoO₄, Al₂(MoO₄)₃, CeMoO₄, CoMoO₄, CuMoO₄, Fe-III-MoO₄, MnMoO₄, NiMoO₄ ou ZnWO₄ ; et
dans lequel les wolframates comprennent Na₂WO₄, AgWO₄, AlWO₄, CeWO₄, CoWO₄, CuWO₄, Fe-III-WO₄, MnWO₄, NiWO₄ ou ZnWO₄ .

3. Revêtement antimicrobien (10, 10') selon la revendication 1, **caractérisé en ce que** l'oxyde métallique et le sel métallique sont TiO₂AgNO₃.

4. Revêtement antimicrobien (10ʺʺ) selon la revendication 1, **caractérisé en ce que** les îlots (16) contiennent TiO₂ et ZnMoO₄.

5. Revêtement antimicrobien (10, 10', 10'', 10‴, 10ʺʺ) selon l'une quelconque des revendications précédentes, **caractérisé en ce que** les îlots (16) comportent une surface réalisée en forme de poêlon avec une zone centrale (18) et une zone de bordure (20) se soulevant de façon relative vers l'extérieur dans le plan radial.

6. Procédé de pulvérisation électrostatique servant au revêtement d'au moins un substrat (12), comprenant au moins les étapes suivantes :
- mise à disposition d'un substrat (12) ;
- revêtement du substrat (12) à l'aide d'une solution ou d'une suspension aqueuse (24) sous forme de gouttelettes au travers du procédé de pulvérisation électrostatique, dans lequel la solution ou la suspension aqueuse (24) contient au moins un oxyde métallique soluble en elle avec une composition de l'oxyde métallique selon la revendication 1 et/ou au moins un sel métallique avec une composition du sel métallique selon la revendication 1, la solution ou la suspension aqueuse (24) présentant des propriétés antimicrobiennes ; et
- formation d'un revêtement antimicrobien permanent (10, 10', 10", 10‴, 10ʺʺ) sur le substrat (12) sous la forme d'une structure matricielle obtenue par évaporation de la phase fluide et/ou aqueuse à partir de la solution ou de la suspension aqueuse (24), de sorte que l'oxyde métallique et/ou le sel métallique soient contenus dans la structure matricielle du revêtement (10, 10', 10", 10‴, 10ʺʺ) ;
le revêtement (10, 10', 10", 10‴, 10ʺʺ) étant réalisé sous la forme d'une structure matricielle, dans lequel la structure matricielle comporte plusieurs îlots espacés les uns par rapport aux autres (16) et dans lequel les îlots (16) présentent un diamètre notamment situé dans une zone d'environ 0,1 µm à environ 500 µm, de préférence d'environ 1 µm à environ 200 µm, de façon particulièrement préférée d'environ 2 µm à environ 100 µm et les îlots (16) étant respectivement placés à une certaine distance les uns des autres en fonction de leur diamètre.

7. Utilisation non thérapeutique d'au moins un oxyde métallique avec une composition de l'oxyde métallique selon la revendication 1 et en option au moins un sel métallique avec une composition du sel métallique selon la revendication 1, contenant un matériau de revêtement permettant de réaliser un revêtement antimicrobien (10, 10', 10", 10‴, 10ʺʺ) sur une surface d'un substrat (12), le revêtement (10, 10', 10'', 10‴, 10ʺʺ) contenant au moins l'oxyde métallique et en option au moins le sel métallique ;
dans lequel le revêtement (10, 10', 10'', 10‴, 10ʺʺ) est réalisé sous la forme d'une structure matricielle, dans lequel la structure matricielle comporte plusieurs îlots espacés les uns par rapport aux autres (16) et dans lequel les îlots (16) présentent un diamètre notamment compris dans une zone d'environ 0,1 µm à environ 500 µm, de préférence d'environ 1 µm à environ 200 µm, de façon particulièrement préférée d'environ 2 µm à environ 100 µm et les îlots (16) étant respectivement placés à une certaine distance les unes des autres en fonction de leur diamètre.
